# EUROPEAN PATENT APPLICATION

(11) **EP 4 756 479 A1**
(43) Date of publication of application: **10.06.2026**
(21) Application number: 24851658.5
(22) Date of filing: 29.07.2024
(51) Int. Cl.: G01S 5/22, G01S 5/30, G08G 1/16

(54) **VEHICLE ACCIDENT DETECTING DEVICE**

(30) Priority: 04.08.2023 JP 2023127856
(71) Applicant: DENSO CORPORATION, Kariya-city, Aichi-pref. 448-8661 (JP)
(72) Inventor: KIMURA, Yosuke, Kariya-city, Aichi-pref., 448-8661 (JP); HAYASHI, Kunihiko, Kariya-ciry, Aichi-pref., 448-8661 (JP); MANABE, Makoto, Kariya-city, Aichi-pref., 448-8661 (JP)
(74) Representative: Winter, Brandl - Partnerschaft mbB
(86) International application number: PCT/JP2024/026973
(87) International publication number: WO 2025/033233

(57) **Abstract**

A vehicle accident detection device (2) includes a sound source location estimation unit (S210 to S250, S1110 to S1180), a vehicle body outer perimeter determination unit (S260 to S330, S1190 to S1220), and a collision determination unit (S410, S450, S460, S480, S520 to S550). The sound source location estimation unit is configured to estimate a sound source estimated location being a location of a sound source based on detection results of sound detection units (31 to 34) mounted to the vehicle and configured to detect a sound. The vehicle body outer perimeter determination unit is configured to determine whether or not the sound source estimated location is on a vehicle body outer perimeter. The collision determination unit is configured to determine that a collision accident has occurred when the vehicle body outer perimeter determination unit determines that the sound source estimated location is on the vehicle body outer perimeter.

## Description

### CROSS REFERENCE TO RELATED APPLICATION

This international application claims the benefit of Japanese Patent Application No. 2023-127856 filed in Japan on August 4, 2023, the entire disclosure of which is incorporated herein by reference.

### TECHNICAL FIELD

The present disclosure relates to a vehicle accident detection device for detecting a vehicle collision accident.

### BACKGROUND ART

Patent literature 1 describes a sound detection device that detects a surrounding object by determining a phase correlation of sound signals collected by two or more sound collecting units and determines based on a phase change degree whether the surrounding object is approaching or moving away.

### PRIOR ART LITERATURE

### PATENT LITERATURE

Patent Literature 1: JP 5954429 B

### SUMMARY OF THE INVENTION

A detailed study by the inventor has revealed such an issue that the technology described in patent literature 1 cannot detect a vehicle collision accident because it cannot calculate a distance to a source of the sound (i.e., sound source).

The present disclosure detects a vehicle collision accident.

An aspect of the present disclosure is a vehicle accident detection device including a sound source location estimation unit, a vehicle body outer perimeter determination unit, and a collision determination unit.

The sound source location estimation unit is configured to estimate a sound source estimated location, which is a location of a sound source, based on detection results of a plurality of sound detection units mounted to the vehicle and configured to detect a sound.

The vehicle body outer perimeter determination unit is configured to determine whether or not the sound source estimated location is on a vehicle body outer perimeter.

The collision determination unit is configured to determine that a collision accident has occurred when the vehicle body outer perimeter determination unit determines that the sound source estimated location is on the vehicle body outer perimeter.

The vehicle accident detection device of the present disclosure can detect a vehicle collision accident by using the plurality of sound detection units mounted to the vehicle.

### BRIEF DESCRIPTION OF DRAWINGS

FIG. 1 is a block diagram illustrating an accident information collection system.
FIG. 2 is a block diagram illustrating a vehicle accident detection device.
FIG. 3 is a diagram illustrating a sound source location estimation method of a first embodiment.
FIG. 4 is a functional block diagram illustrating a functional configuration of the vehicle accident detection device of the first embodiment.
FIG. 5 is a flowchart illustrating an accident detection process of the first embodiment.
FIG. 6 is a flowchart illustrating a sound source location estimation process of the first embodiment.
FIG. 7 is a diagram illustrating a first outer perimeter determination condition.
FIG. 8 is a diagram illustrating a second outer perimeter determination condition.
FIG. 9 is a flowchart illustrating a collision determination process of the first embodiment.
FIG. 10 is a flowchart illustrating a specific operation determination process.
FIG. 11 is a flowchart illustrating a filter setting process.
FIG. 12 is a diagram illustrating a sound source location estimation method of a second embodiment.
FIG. 13 is a functional block diagram illustrating a functional configuration of the vehicle accident detection device of the second embodiment.
FIG. 14 is a flowchart illustrating an accident detection process of the second embodiment.
FIG. 15 is a flowchart illustrating a sound source location estimation process of the second embodiment.
FIG. 16 is a diagram illustrating a sound source location estimation method of a third embodiment.
FIG. 17 is a functional block diagram illustrating a functional configuration of a vehicle accident detection device of the third embodiment.
FIG. 18 is a flowchart illustrating an accident detection process of the third embodiment.
FIG. 19 is a flowchart illustrating a collision determination process of the third embodiment.
FIG. 20 is a diagram illustrating a sound source location estimation method of another embodiment.

### EMBODIMENTS FOR CARRYING OUT INVENTION

### (First Embodiment).

Hereinafter, a first embodiment of the present disclosure will be described with reference to the drawings.

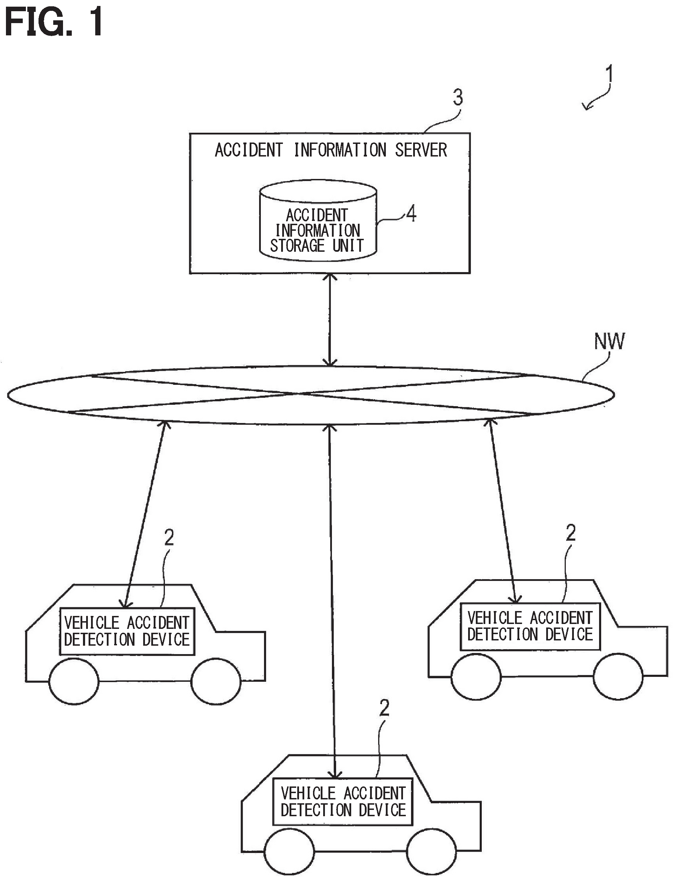

As shown in FIG. 1, the accident information collection system 1 of the present embodiment includes multiple vehicle accident detection devices 2 and an accident information server 3.

The vehicle accident detection device 2 is mounted to a vehicle and has a function of performing data communication with the accident information server 3 via a wide-area wireless communication network NW.

The accident information server 3 acquires the below described accident information from the vehicle accident detection device 2 via the wide-area wireless communication network NW. The accident information server 3 includes an accident information storage unit 4 that stores the accident information.

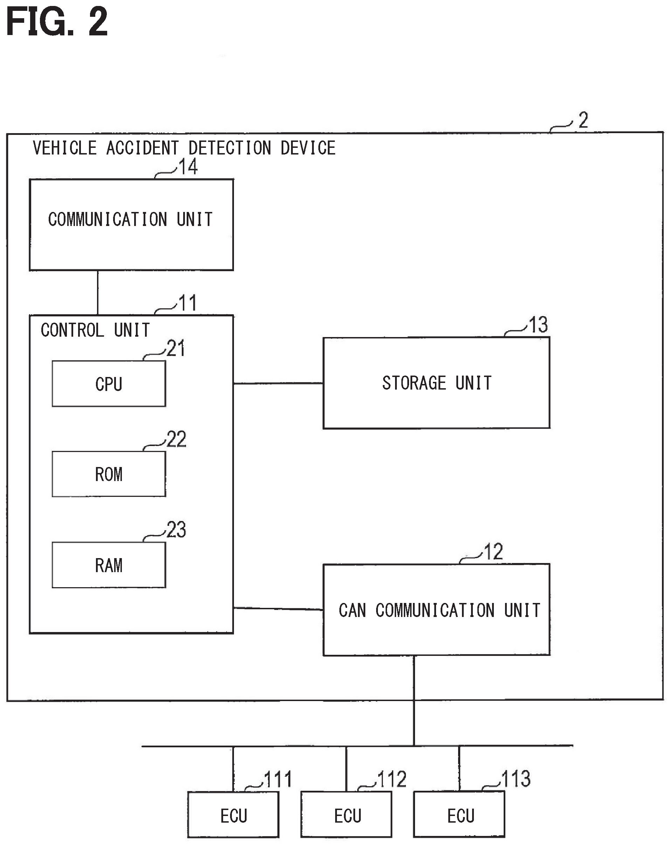

The vehicle accident detection device 2 includes a control unit 11, a CAN communication unit 12, a storage unit 13, and a communication unit 14, as shown in FIG. 2. CAN is an abbreviation for Controller Area Network. CAN is a registered trademark.

The control unit 11 is an electronic control unit including a microcomputer as a main component thereof, the microcomputer including a CPU 21, a ROM 22, a RAM 23, and the like. Various functions of the microcomputer are implemented by the CPU 21 executing a program stored in a non-transitory tangible storage medium. In this example, the ROM 22 corresponds to a non-transitory tangible storage medium storing thereon the program. When the program is executed, a method corresponding to the program is executed. Part or all of the functions executed by the CPU 21 may be provided by hardware with one or more ICs, etc. The number of microcomputers in the control unit 11 may be one or more.

The CAN communication unit 12 is connected via a communication line to multiple ECUs so that data communication is performable, and transmits and receives data according to the CAN communication protocol. Specifically, the multiple ECUs connected to the CAN communication unit 12 include an engine ECU for engine control, a brake ECU for brake control, a steering ECU for steering control, a suspension ECU for suspension control, and an ECU for control to turn lights on and off. In FIG. 2, only an ECU 111, an ECU 112, and an ECU 113 are shown as ECUs connected to the CAN communication unit 12.

The storage unit 13 is a storage device for storing various data.

The communication unit 14 performs data communication with the accident information server 3 via the wide-area wireless communication network NW.

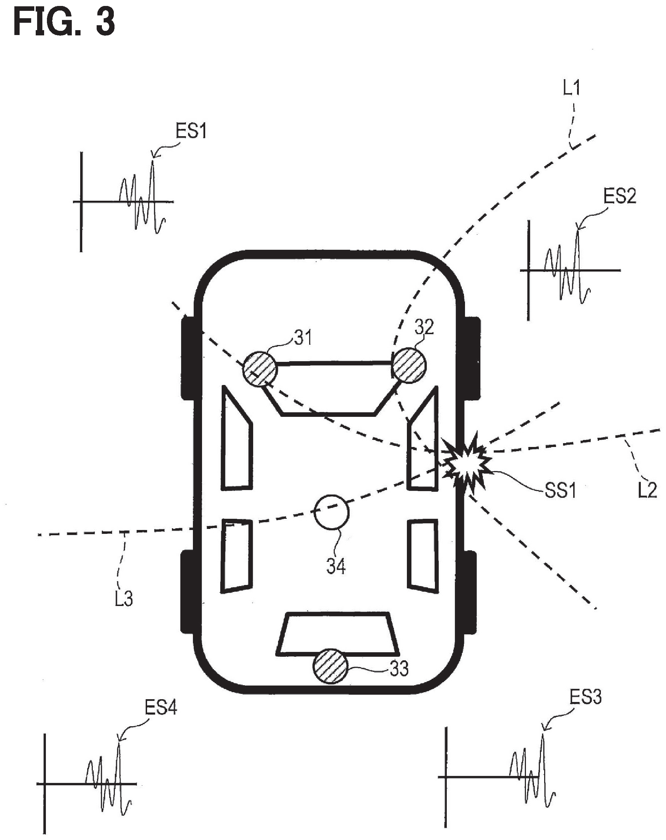

As shown in FIG. 3, the vehicle is mounted with microphones 31, 32, 33, 34. The microphone 31, 32, 33, 34 receives an input of sound wave, converts it into an electrical signal indicating a time variation in amplitude of the input sound wave (hereinafter referred to as "sound wave electrical signal") and outputs it.

In the present embodiment, the microphone 31 is mounted to, for example, a left side portion of the dashboard, the microphone 32 is mounted to, for example, a right side portion of the dashboard, the microphone 33 is mounted to, for example, the rear side portion of a cargo area, and the microphone 34 is mounted to, for example, the center of the ceiling. The microphones 31, 32, 33 are mounted so as to be located on the same horizontal plane.

The microphones 31 to 34 are mounted to locations different from each other. Because of this, a phase difference is present between the microphones 31 to 34 detecting the sound wave generated at a sound source SS1. The sound wave phase difference is considerable as a difference in distance from the sound source SS1 to the microphones 31 to 34. The sound wave electrical signals ES1, ES2, ES3, and ES4 in FIG. 3, respectively, are signals output by the microphones 31, 32, 33, and 34 detecting the sound wave generated at the sound source SS1.

Therefore, based on the difference in distance to the sound source SS1 for a pair of microphones 31 and 32, it is possible to obtain, by calculation, a curve line (hereinafter, distance difference curved line) L1 passing through multiple points where the difference in distance is equal to the difference in distance to the sound source SS1. Similarly, a distance difference curved line L2 can be obtained by calculation based on the difference in distance to the sound source SS1 for a pair of microphones 32 and 33. The distance difference curved line L3 can be obtained by calculation based on the difference in distance to the sound source SS1 for a pair of microphones 31 and 33. For a single pair consisting of two microphones, two distance difference curved lines each being a curved line passing through multiple points where the difference in distance equals to the difference in distance to the sound source SS1 are typically obtained by calculation. It is possible to identify which one of the two distance difference curved lines for the pair is estimated to pass through the sound source SS1, by identifying the microphone that detected the sound wave at an earlier time among the two microphones.

The vehicle accident detection device 2 then estimates that a point at which the distance difference curved lines for the two pairs (e.g., distance difference curved lines L1, L2) intersect or a region surrounded by the distance difference curved lines for the three pairs (i.e., distance difference curved lines L1, L2, L3) is the location of the sound source SS1 in the two dimensions (hereinafter, two-dimensional location).

If there is no measurement error for the distance difference curved lines L1, L2, and L3, the distance difference curved lines L1, L2, and L3 intersect each other at the location of the sound source SS1. In this case, the vehicle accident detection device 2 can estimate that the intersecting point of the three distance difference curved lines L1, L2, and L3 is the two-dimensional location of the sound source SS1.

Based on the same idea, the vehicle accident detection device 2 can estimate the location of the sound source SS1 in three dimensions (hereafter, three-dimensional location) by using a microphone 34 in addition to the microphones 31, 32, and 33.

When the location of the sound source SS1 is successfully estimated, the distances from the microphones 31 to 34 to the sound source SS1 can also be estimated, so that the vehicle accident detection device 2 can also estimate when the detected sound wave was generated.

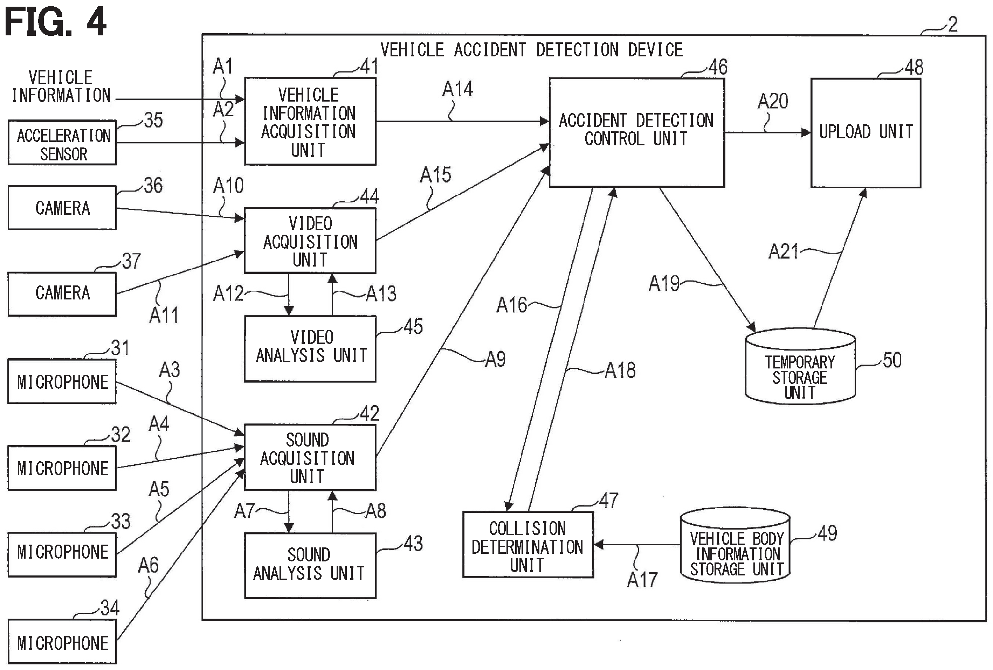

As shown in FIG. 4, the vehicle accident detection device 2 includes a vehicle information acquisition unit 41, a sound acquisition unit 42, a sound analysis unit 43, video acquisition unit 44, a video analysis unit 45, an accident detection control unit 46, a collision determination unit 47, and an upload unit 48 as functional blocks implemented by the CPU 21 executing a program stored in the ROM 22.

The vehicle information acquisition unit 41 constantly acquires vehicle information from the multiple ECUs via the CAN communication unit 12, as indicated by arrow A1. The vehicle information includes, for example, vehicle speed, engine speed, steering wheel angle, brake opening, parking brake on/off, shift location, window on/off, door lock/unlock, indicator on/off, etc.

Further, the vehicle information acquisition unit 41 constantly acquires acceleration information indicating an acceleration detected by an acceleration sensor 35 mounted to the vehicle, as indicated by arrow A2.

The sound acquisition unit 42 constantly acquires the sound wave electrical signals from the microphones 31 to 34, as indicated by arrows A3, A4, A5, and A6. Based on the sound waves indicated by the acquired sound wave electrical signals, the sound acquisition unit 42 detects a sound wave possibly generated by an object colliding with the vehicle (hereinafter referred to as "collision sound candidate").

Upon detecting the collision sound candidate, the sound acquisition unit 42 outputs sound wave data indicating a time variation in the amplitude of the sound wave corresponding to the collision sound candidate to the sound analysis unit 43, as indicated by arrow A7.

The sound analysis unit 43 analyzes the sound waves indicated by the sound wave data acquired from the sound acquisition unit 42 to estimate the location of the sound source of the collision sound candidate and the timing of generation of the collision sound candidate.

The sound analysis unit 43 notifies the sound acquisition unit 42 of the location of the sound source of the collision sound candidate and the timing of generation of the collision sound candidate, as indicated by arrow A8.

Upon detecting the collision sound candidate, the sound acquisition unit 42 notifies the accident detection control unit 46 of the location of the sound source of the collision sound candidate, generation timing of the collision sound candidate, and waveform of the collision sound candidate, as shown by arrow A9.

The video acquisition unit 44 constantly acquires video data generated by the cameras 36 and 37 mounted to the vehicle, as indicated by arrows A10 and A11. The cameras 36 and 37 are mounted so as to image at least an outside of the vehicle.

The video acquisition unit 44 outputs the acquired video data to the video analysis unit 45, as indicated by arrow A12.

The video analysis unit 45 analyzes the video data acquired from the video acquisition unit 44 to determine whether or not an object having come in contact with the vehicle is present. The video analysis unit 45 notifies the video acquisition unit 44 of a result of the determination as to the presence or absence of the object having come in contact with the vehicle, as indicated by arrow A13.

Upon being notified of the collision sound candidate from the sound acquisition unit 42, the accident detection control unit 46 acquires the vehicle information, the acceleration information, and the video data at the timing of generation of the collision sound candidate, as shown by arrows A14 and A15.

After acquiring the vehicle information, the acceleration information and the video data, the accident detection control unit 46 outputs a collision determination request to the collision determination unit 47, as indicated by arrow A16.

Upon acquiring the collision determination request from the accident detection control unit 46, the collision determination unit 47 acquires the vehicle body information from the vehicle body information storage unit 49, as indicated by arrow A17. The vehicle body information is information indicating the coordinates of a vehicle body outer perimeter.

The collision determination unit 47 determines whether or not the object collided with the vehicle based on the vehicle information, the acceleration information, the video data, and the vehicle body information.

The collision determination unit 47 notifies the accident detection control unit 46 of a result of the determination as to whether or not the object collided with the vehicle, as indicated by arrow A18.

The accident detection control unit 46 generates accident information including the acquired vehicle information and the video data when the object collided with the vehicle based on the determination result acquired from the collision determination unit 47. The accident detection control unit 46 stores the generated accident information in the temporary storage unit 50, as indicated by arrow A19.

After storing the accident information in the temporary storage unit 50, the accident detection control unit 46 outputs an upload command to the upload unit 48, as indicated by arrow A20.

Upon acquiring the upload command from the accident detection control unit 46, the upload unit 48 retrieves the accident information from the temporary storage unit 50, as indicated by arrow A21. The upload unit 48 uploads the retrieved accident information to the accident information server 3. The accident information server 3 then stores the uploaded accident information in the accident information storage unit 4.

Next, a procedure of an accident detection process executed by the control unit 11 will be described. The accident detection process is a process that is executed repeatedly during the operation of the vehicle accident detection device 2. In the present embodiment, for the sake of simplicity of description, description will be given on accident detection using the microphones 31, 32, 33.

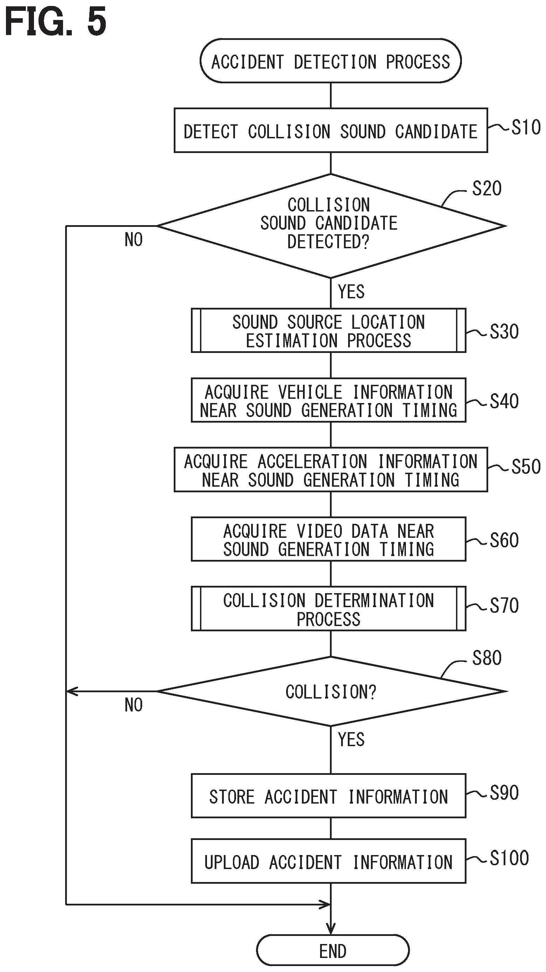

When the accident detection process is executed, the CPU 21 of the control unit 11 performs detection for the collision sound candidate in S10, as shown in FIG. 5. Specifically, the CPU 21 determines that a collision sound candidate has been detected when the amplitude of the sound wave indicated by the sound wave electric signal acquired from the microphone 31 to 33 is greater than or equal to a preset collision sound determination value. Before determining whether the amplitude of the sound wave is greater than or equal to the collision sound determination value, the CPU 21 may perform filtering of removing a sound having no possibility of being the collision sound from the sound waveform.

In S20, the CPU 21 determines whether or not the collision sound candidate has been detected based on the detection result in S10. If no collision sound candidate has been detected, the CPU 21 ends the accident detection process.

If the collision sound candidate has been detected, the CPU 21 executes in S30 a sound source location estimation process described below. In the sound source location estimation process, the CPU 21 estimates the location of the sound source of the collision sound candidate (hereinafter referred to as "sound source estimated location") and the timing of the occurrence of the collision sound candidate (hereinafter referred to as "sound occurrence timing").

In S40, the CPU 21 acquires the vehicle information near the sound generation timing. Near the sound generation timing refers to, for example, a time range from a given time before (e.g., 1 second before) acquiring the sound generation timing to a given time after (e.g., 1 second after) acquiring the sound generation timing.

In S50, the CPU 21 acquires the acceleration information near the sound generation timing.

In S60, the CPU 21 acquires the video data near the sound generation timing.

In S70, the CPU 21 executes a collision determination process described below. In the collision determination process, the CPU 21 determines whether or not an object collided with the vehicle.

In S80, the CPU 21 determines whether or not the collision has occurred based on a result of the determination in S70. If no collision has occurred, the CPU 21 ends the accident detection process.

If the collision has occurred, the CPU 21 in S90 generates the above accident information and stores the generated accident information in the temporary storage unit 50.

In S100, the CPU 21 retrieves the accident information generated in S90 from the temporary storage unit 50 and uploads the retrieved accident information to the accident information server 3.

When the process of S100 is ended, the CPU 21 ends the accident detection process.

Next, a procedure of the sound source location estimation process performed in S30 will be described.

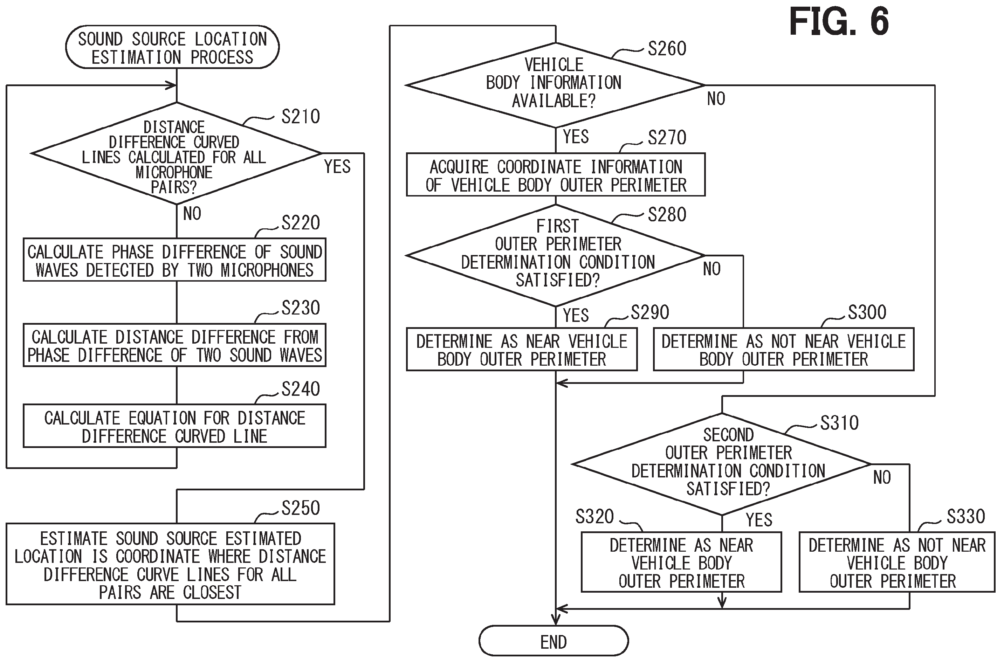

When the sound source location estimation process is executed, as shown in FIG. 6, the CPU 21 in S210 determines whether the above-described distance difference curved line has been calculated for all pairs of the microphones 31, 32, 33. All pairs in the present embodiment are a pair of the microphone 31 and the microphone 32, a pair of the microphone 32 and the microphone 33, and a pair of the microphone 31 and the microphone 33.

If a pair for which the distance difference curved line has not been calculated is present, the CPU 21 in S220 selects one pair for which the distance difference curved line has not been calculated and calculates the phase difference between the two sound waves detected by the two microphones forming the selected pair.

In S230, the CPU 21 calculates the difference in distance to the sound source from the two microphones forming the selected pair based on the phase difference calculated in S220.

In S240, the CPU 21 calculates, based on the distance difference calculated in S230, an equation representing a distance difference curved line that passes through multiple points where the difference in distance from the two microphones forming the selected pair is equal to the distance difference from the sound source, and proceeds to S210.

If the distance difference curved lines have been calculated for all pairs in S210, the CPU 21 in S250 estimates that the sound source estimated location is the coordinate location where the distance difference curved lines for all pairs are closest to each other.

In S260, the CPU 21 determines whether or not the above vehicle body information is stored in the vehicle body information storage unit 49. If the vehicle body information is stored, the CPU 21 in S270 retrieves the vehicle body information from the vehicle body information storage unit 49.

In S280, the CPU 21 determines whether or not a first outer perimeter determination condition is satisfied.

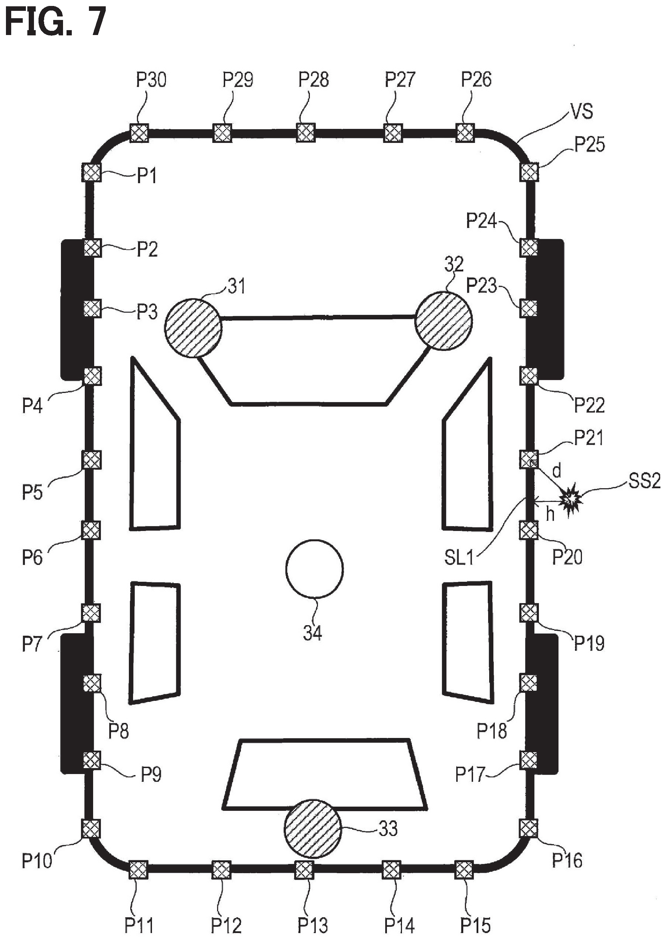

As shown in FIG. 7, the vehicle body information includes information on the coordinate locations of multiple points that are set on a surface of a vehicle body outer portion VS (hereafter, outer perimeter points) P1 to P30.

The first outer perimeter determination condition is that both the following outer perimeter point determination condition and outer perimeter line determination condition are satisfied.

The outer perimeter point determination condition is that a distance between the sound source estimated location estimated in S250 and an outer perimeter point closest to this sound source estimated location is less than or equal to a preset outer perimeter point determination distance.

The outer perimeter line determination condition is that a distance between the sound source estimated location estimated in S250 and an outer perimeter line closest to the sound source estimated location among multiple outer perimeter lines each connecting two mutually adjacent outer perimeter points is less than or equal to a preset outer perimeter line determination distance.

For example, the outer perimeter point determination condition is satisfied when the distance d between the sound source SS2 shown in FIG. 7 and the outer perimeter point P21 closest to the sound source SS2 is less than or equal to the outer perimeter point determination distance.

The outer perimeter line determination condition is satisfied when the distance h between the sound source SS2 shown in FIG. 7 and the outer perimeter line SL1 connecting the outer perimeter point P20 and the outer perimeter point P21 is less than or equal to the outer perimeter line determination distance.

As shown in FIG. 6, if the first outer perimeter determination condition is satisfied in S280, the CPU 21 in S290 determines that the sound source estimated location estimated in S250 is near the vehicle body outer perimeter, and the sound source location estimation process is ended.

If the first outer perimeter determination condition is not satisfied in S280, the CPU 21 determines in S300 that the sound source estimated location estimated in S250 is not near the vehicle body outer perimeter, and the sound source location estimation process is ended.

If no vehicle body information is stored in S260, the CPU 21 in S310 determines whether or not a second outer perimeter determination condition is satisfied.

The second outer perimeter determination condition is that the following first distance determination condition, second distance determination condition, and third distance determination condition are all satisfied.

The first distance determination condition is that a distance ΔA is in a range between X1 multiplied by the distance AB and X2 multiplied by the distance AB, and a distance ΔB is in a range between X3 multiplied by the distance AB and X4 multiplied by the distance AB, and the distance ΔA is in a range between X5 multiplied by the distance ΔB and X6 multiplied by the distance.

The second distance determination condition is that the distance ΔB is in a range between Y1 multiplied by the distance BC and Y2 multiplied by the distance BC, and a distance ΔC is in a range between Y3 multiplied by the distance BC and Y4 multiplied by the distance BC, and the distance ΔB is in a range between Y5 multiplied by the distance ΔC and Y6 multiplied by the distance ΔC.

The third distance determination condition is that the distance ΔC is in a range between Z1 multiplied by the distance CA and Z2 multiplied by the distance CA, and the distance ΔA is in a range between Z3 multiplied by the distance CA and Z4 multiplied by the distance CA, and the distance ΔC is in a range between Z5 multiplied by the distance ΔA and Z6 multiplied by the distance ΔA.

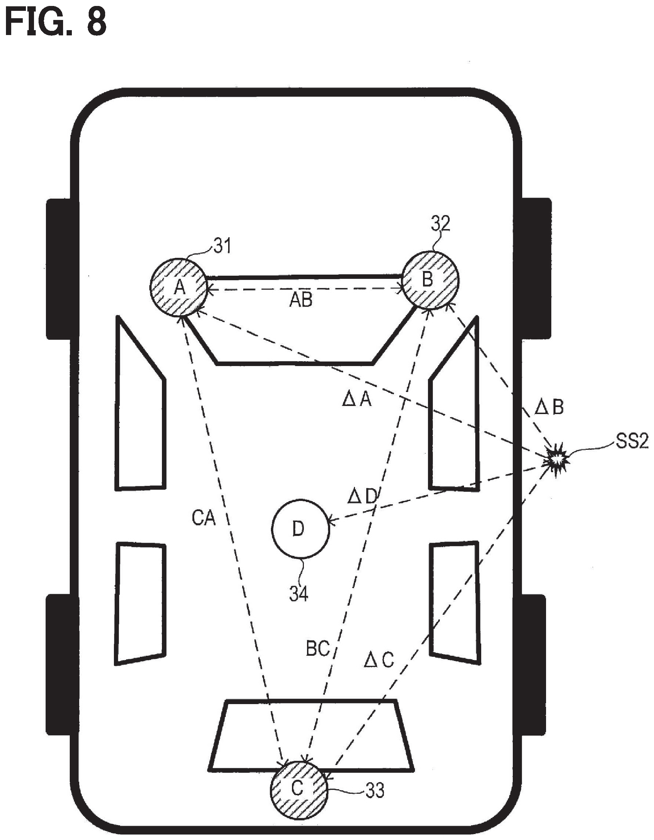

As shown in FIG. 8, the distance ΔA is a distance between the microphone 31 and the sound source SS2. The distance ΔB is a distance between the microphone 32 and the sound source SS2. The distance ΔC is a distance between the microphone 33 and the sound source SS2. The distance AB is a distance between the microphone 31 and the microphone 32. The distance BC is a distance between the microphone 32 and the microphone 33. The distance CA is a distance between the microphone 33 and the microphone 31.

The first distance determination condition indicates that when a triangle is formed with the location of the microphone 31, the location of the microphone 32, and the location of sound source SS2 as vertices, the lengths of the three sides forming the triangle fall within a certain range. The above X1 to X6 are set so that the lengths of the three sides forming the triangle fall within a certain range.

The second distance determination condition indicates that when a triangle is formed with the location of the microphone 32, the location of the microphone 33, and the location of the sound source SS2 as vertices, the lengths of the three sides forming the triangle fall within a certain range. The above Y1 to Y6 are set so that the lengths of the three sides forming the triangle fall within a certain range.

The third distance determination condition indicates that when a triangle is formed with the location of the microphone 33, the location of the microphone 31, and the location of the sound source SS2 as vertices, the lengths of the three sides forming the triangle fall within a certain range. The above Z1 to Z6 are set so that the lengths of the three sides forming the triangle fall within a certain range.

As shown in FIG. 6, if the second outer perimeter determination condition is satisfied in S310, the CPU 21in S320 determines that the sound source estimated location estimated in S250 is near the vehicle body outer perimeter, and the sound source location estimation process is ended.

If the second outer perimeter determination condition is not satisfied in S310, the CPU 21 in S330 determines that the sound source estimated location estimated in S250 is not near the vehicle body outer perimeter, and the sound source location estimation process is ended.

Next, a procedure for the collision determination process performed in S70 will be described.

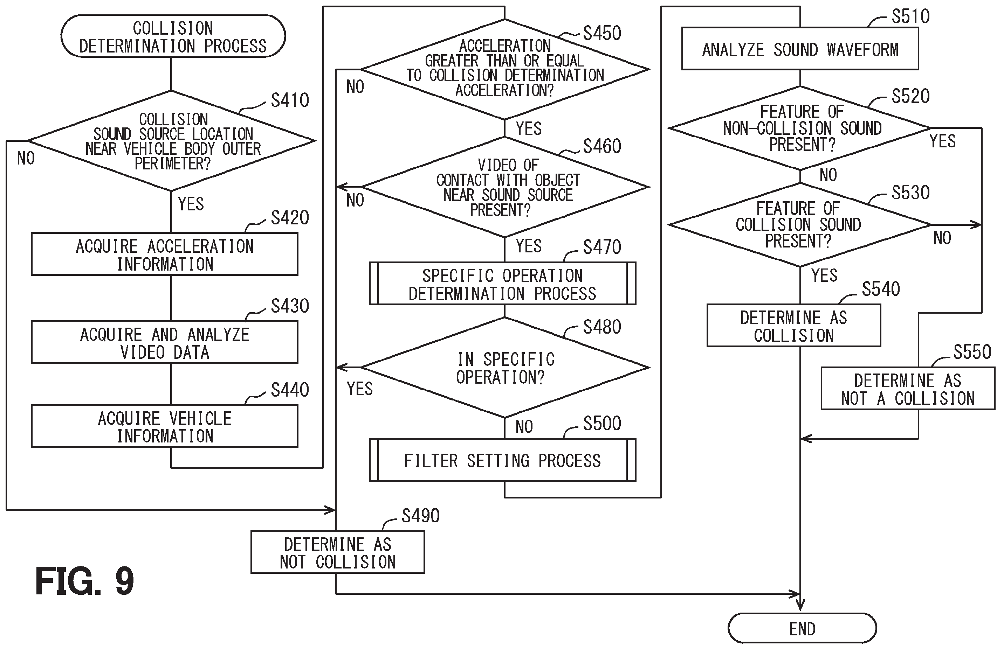

When the collision determination process is executed, as shown in FIG. 9, the CPU 21 in S410 determines whether or not the sound source estimated location is near the vehicle body outer perimeter. If the sound source estimated location is not near the vehicle body outer perimeter, the CPU 21 proceeds to S490.

If the sound source estimated location is near the vehicle body outer perimeter, the CPU 21 in S420 acquires acceleration information near the sound generation timing.

In S430, the CPU 21 acquires the video data near the sound generation timing and analyzes the acquired video data to determine whether or not the object had come in contact with the vehicle near the sound source estimated location.

In S440, the CPU 21 acquires the vehicle information near the sound generation timing.

In S450, the CPU 21 determines whether or not the acceleration indicated by the acceleration information acquired in S420 is greater than or equal to a preset collision determination acceleration. If the acceleration is less than the collision determination acceleration, the CPU 21 proceeds to S490.

If the acceleration is greater than or equal to the collision determination acceleration, the CPU 21 in S460 determines, based on a result of the determination in S430, whether or not video imaging the object in contact with the vehicle near the sound source estimated location is present in the video data acquired in S430.

If the video imaging the object in contact with the vehicle near the sound source estimated location is absent, the CPU 21 proceeds to S490. If the video imaging the object in contact with the vehicle near the sound source estimated location is present, the CPU 21 in S470 executes a specific operation determination process described below.

In S480, the CPU 21 determines, based on a result of the determination in S470, whether or not a specific operation in progress is present, which will be described later. If the specific operation in progress is present, the CPU 21 proceeds to S490.

Upon proceeding to S490, the CPU 21 determines that the collision sound candidate detected in S10 is not caused by a collision and ends the collision determination process.

If the specific operation in progress is not present in S480, the CPU 21 in S500 executes a filter setting process described below.

In S510, the CPU 21 analyzes the waveform of the sound wave on which the filter setting process in S500 has been executed and thereby determines whether or not a feature of collision sound is present and whether or not a feature of non-collision sound is present.

In S520, the CPU 21 determines, based on a result of the determination in S510, whether or not the feature of non-collision sound is present in the sound wave near the sound generation timing. If the feature of non-collision sound is present, the CPU 21 proceeds to S550. Examples of the non-collision sound include a vehicle operation sound resulting from an operation performed by the driver in the vehicle (e.g., a sound when a parking brake is operated), and speech.

if the feature of non-collision sound is absent, the CPU 21 in S530 determines, based on a result of the determination in S510, whether or not the feature of collision sound is present in the sound wave near the sound generation timing. If the feature of collision sound is absent, the CPU 21 proceeds to S550. If the feature of collision sound is present, the CPU 21 proceeds to S540.

Upon proceeding to S540, the CPU 21 determines that the collision sound candidate detected in S10 is caused by a collision, and ends the collision determination process.

Upon proceeding to S550, the CPU 21 determines that the collision sound candidate detected in S10 is not caused by a collision and ends the collision determination process.

Next, the procedure for the specific operation determination process performed in S470 is described.

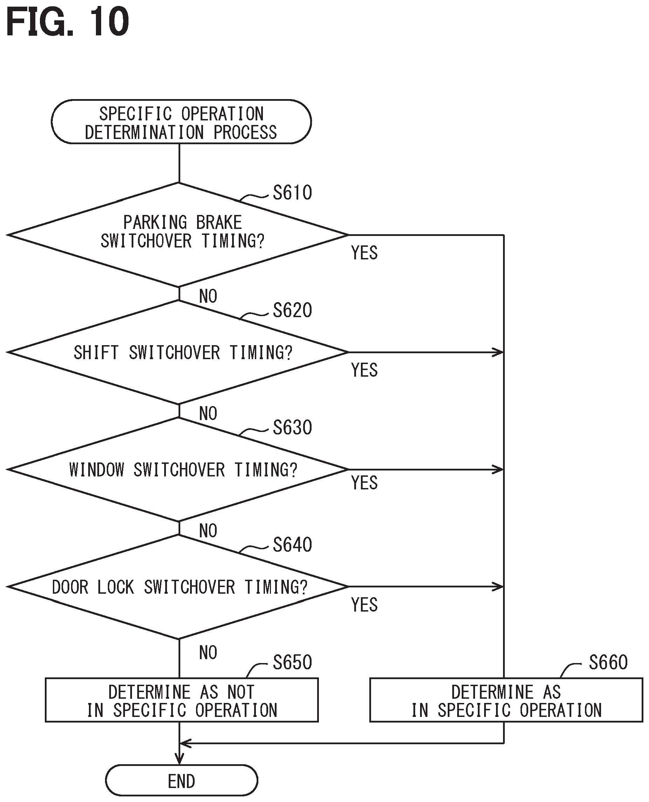

When the specific operation determination process is executed, as shown in FIG. 10, the CPU 21 in S610 determines, based on the vehicle information near the sound generation timing, whether or not it is a parking brake switchover timing. If it is the parking brake switchover timing, the CPU 21 proceeds to S660. If it is not the parking brake switchover timing, the CPU 21 in S620 determines whether or not it is a shift switchover timing, based on the vehicle information near the sound generation timing.

If it is the shift switchover timing, the CPU 21 proceeds to S660. If it is not the shift switchover timing, the CPU 21 in S630 determines whether or not it is a window switchover timing, based on the vehicle information near the sound generation timing.

If it is the window switchover timing, the CPU 21 proceeds to S660. If it is not the window switchover timing, the CPU 21 in S640 determines whether or not it is a door lock switchover timing, based on the vehicle information near the sound generation timing.

If it is the door lock switchover timing, the CPU 21 proceeds to S660. If it is not the door lock switchover timing, the CPU 21 proceeds to S650.

Upon proceeding to S650, the CPU 21 determines that the specific operation by the driver in progress is not present, and ends the specific operation determination process.

Upon proceeding to S660, the CPU 21 determines that the specific operation by the driver in progress is present, and ends the specific operation determination process.

Next, a procedure of the filter setting process executed in S500 will be described.

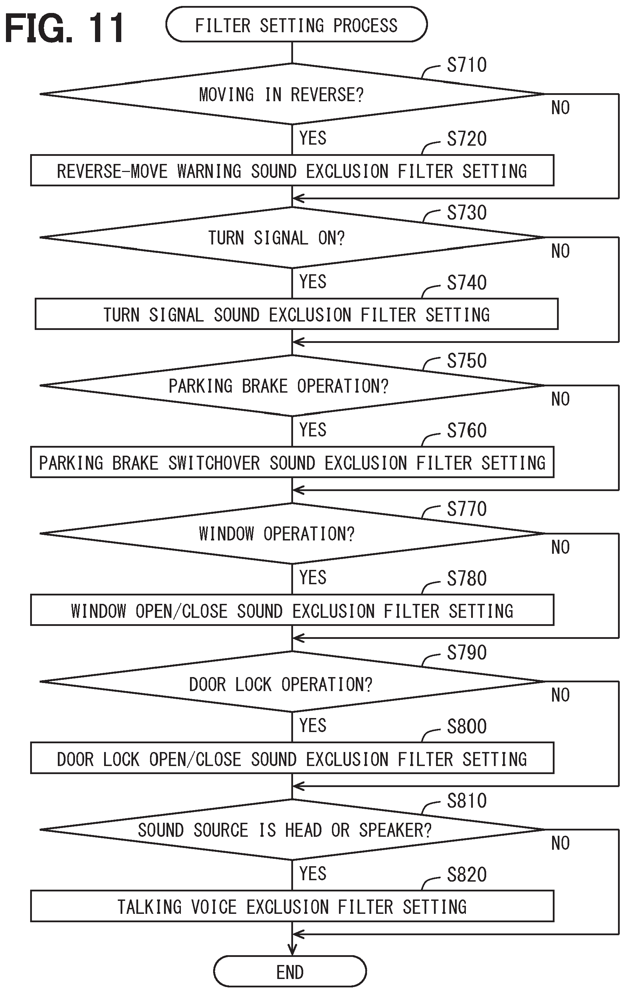

When the filter setting process is executed, as shown in FIG. 11, the CPU 21 in S710 determines whether or not the reverse motion of the vehicle is present, based on the vehicle information near the sound generation timing. If the reverse motion of the vehicle is not present, the CPU 21 proceeds to S730. If the reverse motion of the vehicle is present, the CPU 21 in S720 performs, on the sound wave data near the sound generation timing, the filter process of removing a reverse warning sound and proceeds to S730.

Upon proceeding to S730, the CPU 21 determines whether or not ON of a turn signal of the vehicle is present, based on the vehicle information near the sound generation timing. If ON of the turn signal of the vehicle is not present, the turn signal of the vehicle is not ON, the CPU 21 proceeds to S750. If ON of the turn signal of the vehicle is present, the turn signal of the vehicle is ON, the CPU 21 in S740 performs, on the sound wave data near the sound generation timing, a filter process of removing a turn signal sound and proceeds to S750.

Upon proceeding to S750, the CPU 21 determines whether or not the driver has operated the parking brake, based on the vehicle information near the sound generation timing. If the driver has not operated the parking brake, the CPU 21 proceeds to S770. If the driver has operated the parking brake, the CPU 21 in S760 performs, on the sound wave data near the sound generation timing, a filter process of removing the parking brake switchover sound and proceeds to S770.

Upon proceeding to S770, the CPU 21 determines whether or not the driver has performed an operation for opening or closing the window, based on the vehicle information near the sound generation timing. If the operation for opening or closing the window has not been performed by the driver, the CPU 21 proceeds to S790. If the operation for opening or closing the window has been performed by the driver, the CPU 21 in S780 performs, on the sound wave data near the sound generation timing, a filter process of removing a window opening/closing sound and proceeds to S790.

Upon proceeding to S790, the CPU 21 determines whether or not the driver has performed a door lock operation, based on the vehicle information near the sound generation timing. If the driver has not performed the door lock operation, the CPU 21 proceeds to S810. If the driver has performed the door lock operation, the CPU 21 in S800 performs, on the sound wave data near the sound generation timing, a filter process of removing a door lock opening/closing sound and proceeds to S810.

Upon proceeding to S810, the CPU 21 determines whether or not the sound source estimated location is near a head of the driver or near an in-vehicle speaker. If the sound source estimated location is neither near the head of the driver nor near the in-vehicle speaker, the CPU 21 ends the filter setting process.

If the sound source estimated location is near the driver's head or near the in-vehicle speaker, the CPU 21 in S820 performs, on the sound wave data near the sound generation timing, a filter process of removing a speech sound and ends the filter setting process.

An order in which S720, S740, S760, S780, S800, and S820 are performed is not limited to a particular order.

The vehicle accident detection device 2 configured as described above is configured to estimate the location of the sound source (i.e., the sound source estimated location) based on detection results of multiple microphones 31 to 34 mounted to the vehicle and configured to detect the sound. Specifically, the vehicle accident detection device 2 is configured to estimate the sound source estimated location based on the difference in phase (i.e., a difference in sound detection timing) between the sound waves detected by respective microphones 31 to 34. The vehicle accident detection device 2 is configured to determine whether or not the sound source estimated location is on the vehicle body outer perimeter. The vehicle accident detection device 2 is configured to determine that a collision accident has occurred, upon determining that the sound source estimated location is on the vehicle body outer perimeter.

This vehicle accident detection device 2 can detect a vehicle collision accident using multiple microphones 31 to 34 mounted to the vehicle.

The vehicle accident detection device 2 is configured to determine that the sound source estimated location is on the vehicle body outer perimeter when the preset first or second outer perimeter determination condition indicating that the sound source estimated location is near the vehicle body outer perimeter is satisfied. The first outer perimeter determination condition is set to indicate that the sound source estimated location is near the vehicle body outer perimeter, based on the vehicle body information. The second outlier determination condition is set based on multiple distances from the multiple microphones 31 to 33 to the sound source estimated location.

The vehicle accident detection device 2 further includes a sound analysis unit 43 configured to analyze the waveform of the sounds detected by the multiple microphones 31 to 33. The vehicle accident detection device 2 is configured to determine that the collision accident has occurred, when the vehicle accident detection device 2 determines that the sound source estimated location is on the vehicle body outer perimeter and furthermore the sounds detected by the multiple microphones 31 to 33 have a collision sound feature preset as a feature of collision sound based on the result of analysis by the sound analysis unit 43. This vehicle accident detection device 2 can further improve determination accuracy of collision accident because of the determination based on the collision sound feature.

The vehicle accident detection device 2 is configured to determine that the collision accident has occurred, when the vehicle accident detection device 2 determines that the sound source estimated location is on the vehicle body outer perimeter and furthermore the sounds detected by the multiple microphones 31 to 33 do not have a non-collision sound feature preset as a feature of non-collision sound based on the result of analysis by the sound analysis unit 43. This vehicle accident detection device 2 can further improve determination accuracy of collision accident because of the determination based on the non-collision sound.

The vehicle accident detection device 2 is further configured to perform, on the sounds detected by the multiple microphones 31 to 33, a filter process of removing a non-collision sound. This vehicle accident detection device 2 can suppress occurrence of a situation in which it is determined due to generation of the non-collision sound that the collision sound has generated, improving determination accuracy of collision accident.

The vehicle accident detection device 2 is further configured to determine whether or not the driver of the vehicle has performed a predetermined specific operation. The vehicle accident detection device 2 is configured to determine that the collision accident has not occurred, when the vehicle accident detection device 2 determines that the sound source estimated location is on the vehicle body outer perimeter and furthermore the driver of the vehicle has performed the predetermined specific operation. This vehicle accident detection device 2 can suppress occurrence of a situation in which it is determined due to the specific operation performed by the driver that the collision sound has generated, improving determination accuracy of collision accident.

The vehicle accident detection device 2 is configured to determine that the collision accident has not occurred, when the vehicle accident detection device 2 determines that the sound source estimated location is on the vehicle body outer perimeter and furthermore the acceleration at a time of the sound generation at the sound source is less than the preset collision determination acceleration. This vehicle accident detection device 2 can further improve determination accuracy of collision accident because of the determination based on the acceleration.

The vehicle accident detection device 2 further includes the video analysis unit 45 configured to estimate a collision sound source location being the location at which an object collided with the vehicle, by analyzing the video data generated by the camera 36, 37 mounted to the vehicle and configured to image at least an outside of the vehicle. The vehicle accident detection device 2 is configured to determine that the collision accident has not occurred, when the vehicle accident detection device 2 determines that the sound source estimated location is on the vehicle body outer perimeter and furthermore the object has not collided with the vehicle at a time of the sound generation at the sound source based on a result of the analysis by the video analysis unit 45. This vehicle accident detection device 2 can further improve determination accuracy of collision accident because of the determination based on the video data.

The multiple microphones 31 to 34 are mounted to an inside the vehicle. This can eliminate protective measures for the microphones 31 to 34, and furthermore, the microphones 31 to 34 can be shared with other applications.

In the embodiment described above, the microphones 31 to 34 correspond to a sound detection unit, S210 to S250 correspond to a process of a sound source location estimation unit, S260 to S330 correspond to a process of a vehicle body outer perimeter determination unit, and S410, S450, S460, S480, S520 to S550 correspond to a process of a collision determination unit.

The camera 36, 37 corresponds to an imaging unit, S710 to S820 correspond to a process of a removing unit, and S610 to S660 correspond to a process of a specific operation determination unit.

### (Second Embodiment).

Hereinafter, a second embodiment of the present disclosure will be described with reference to the drawings. A difference between the first embodiment and the second embodiment will be described. Like reference numerals are used to refer to like parts.

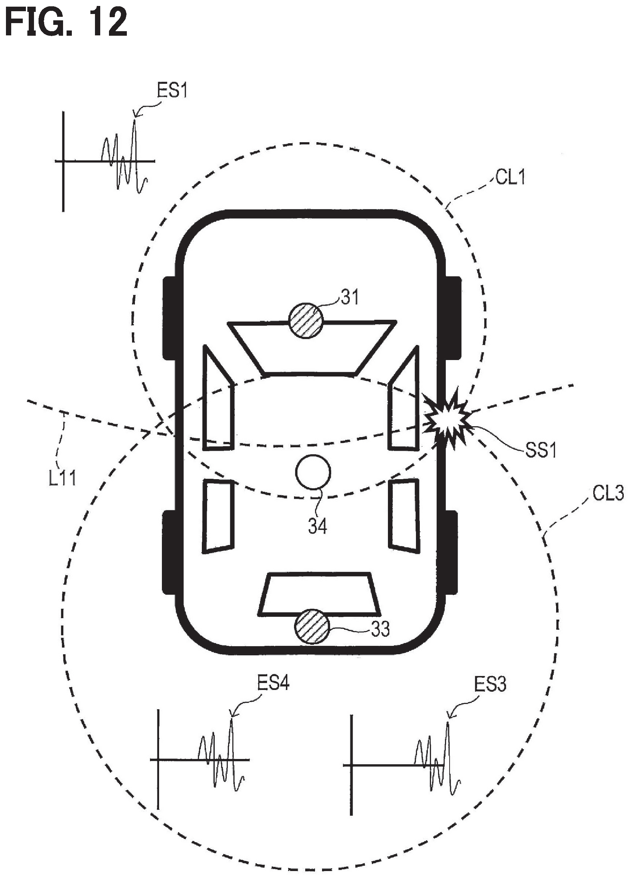

The accident information collection system 1 of the second embodiment differs from the first embodiment in that the microphone 32 is omitted and the microphone 31 is mounted to the center of the dashboard, as shown in FIG. 12.

The vehicle accident detection device 2 of the second embodiment estimates timing of sound generation at the sound source (i.e., sound generation timing) via detecting information other than sound (n the present embodiment, for example, acceleration).

After the sound wave is generated by the sound source SS1, the microphone 31 and the microphone 33 detect the sound wave generated by the sound source SS1. This time difference is considerable as the distance from the sound source SS1.

Therefore, for each microphone 31, 33, based on the distance from the sound source SS1, a circle CL1, CL3 (hereafter, distance circle) passing through multiple points with the constant distance as the distance to the sound source SS1 (hereafter, distance circle) can be calculated.

For a pair of the microphones31 and the microphone 33, based on the difference in distance from the sound source SS1, the distance difference curved line L11 can be calculated for estimating the location of the sound source SS1.

The vehicle accident detection device 2 estimates that the two-dimensional location of the sound source SS1 is a point where the distance circle CL1 and the distance difference curve L11 intersect each other, or a point where the distance circle CL2 and the distance difference curve L11 intersect each other, or a region surrounded by the distance circle CL1, the distance circle CL2, and the distance difference curve L1.

If there is no measurement error for the distance circle CL1, CL2 and the distance difference curved line L11, the distance circles CL1, CL2 and the distance difference curved line L11 intersect at the location of the sound source SS1. In this case, the vehicle accident detection device 2 can estimate that the two-dimensional location of the sound source SS1 is a point where the distance circles CL1, CL2 and the distance difference curved line L11 intersect.

Based on the same idea, the vehicle accident detection device 2 can estimate the three-dimensional location of the sound source SS1 by using the microphone 34 in addition to the microphones 31 and 33.

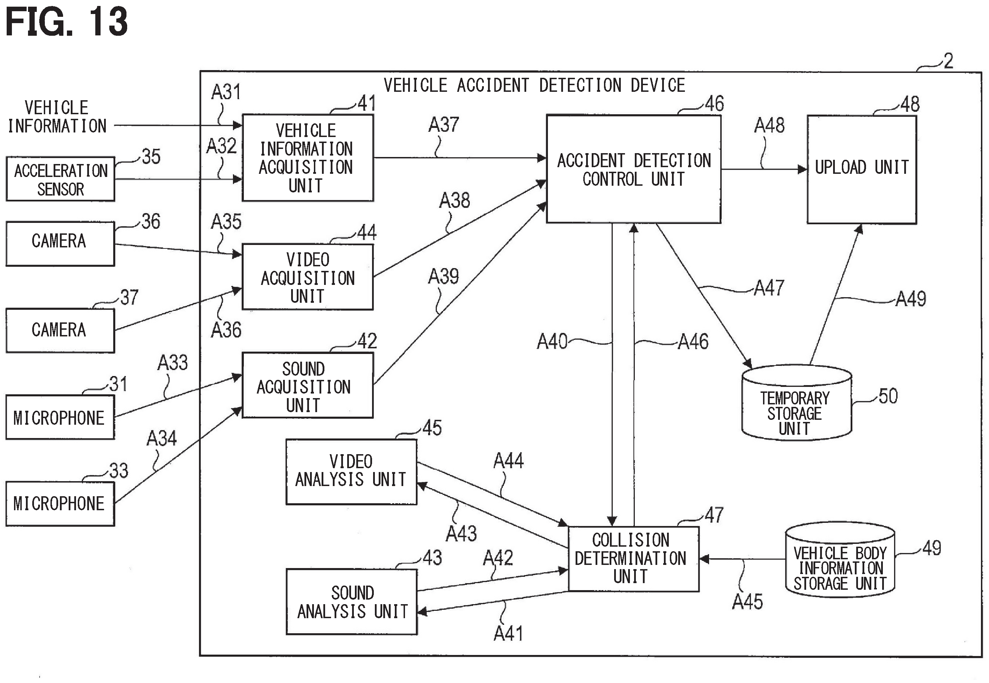

As shown in FIG. 13, the vehicle accident detection device 2 of the second embodiment includes a vehicle information acquisition unit 41, a sound acquisition unit 42, a sound analysis unit 43, a video acquisition unit 44, a video analysis unit 45, an accident detection control unit 46, a collision determination unit 47 and an upload unit 48 as functional blocks implemented by the CPU 21 executing a program stored in the ROM 22.

The vehicle information acquisition unit 41 constantly acquires vehicle information from multiple ECUs via the CAN communication unit 12, as indicated by arrow A31.

Furthermore, the vehicle information acquisition unit 41 constantly acquires acceleration information indicating the acceleration detected by the acceleration sensor 35 mounted to the vehicle, as indicated by arrow A32.

The sound acquisition unit 42 constantly acquires sound wave electrical signals from the microphones 31, 33, as indicated by arrows A33 and A34.

The video acquisition unit 44 constantly acquires video data generated by the cameras 36, 37 mounted to the vehicle, as indicated by arrows A35 and A36.

The vehicle information at a time when the acceleration exceeds a threshold is acquired by the accident detection control unit 46 from the vehicle information acquisition unit 41, as indicated by arrow A37.

The Video data at a time when the acceleration exceeds the threshold is acquired by the accident detection control unit 46 from the video acquisition unit 44, as indicated by arrow A38.

The sound wave data a time when the acceleration exceeds the threshold is acquired by the accident detection control unit 46 from the sound acquisition unit 42, as indicated by arrow A39.

After acquiring the vehicle information, the video data and the sound wave data, the accident detection control unit 46 outputs a collision determination request to the collision determination unit 47, as indicated by arrow A40.

Upon acquiring the collision determination request from the accident detection control unit 46, the collision determination unit 47 outputs a sound source location estimation request to the sound analysis unit 43, as indicated by arrow A41.

Upon acquiring the sound source location estimation request from the collision determination unit 47, the sound analysis unit 43 estimates the location of the sound source based on the timing when the acceleration exceeds the threshold value and the timing when the sound acquisition unit 42 detects the sound wave. The sound analysis unit 43 notifies the collision determination unit 47 of the sound source estimated location, as indicated by arrow A42.

Upon acquiring the collision determination request from the accident detection control unit 46, the collision determination unit 47 outputs a contact determination request to the video analysis unit 45, as indicated by arrow A43.

Upon acquiring the contact determination request from the collision determination unit 47, the video analysis unit 45 analyzes the video data at the time when the acceleration exceeds the threshold value and determines whether or not an object had come into contact with the vehicle. The video analysis unit 45 notifies the collision determination unit 47 of a result of the determination as to the presence or absence of the object in contact with the vehicle, as indicated by arrow A44.

Upon acquiring the collision determination request from the accident detection control unit 46, the collision determination unit 47 acquires the vehicle body information from the vehicle body information storage unit 49, as indicated by arrow A45.

The collision determination unit 47 determines whether or not an object collided with the vehicle based on the sound source estimated location acquired from the sound analysis unit 43, the determination results acquired from the video analysis unit 45, and the vehicle body information acquired from the vehicle body information storage unit 49.

The collision determination unit 47 notifies the accident detection control unit 46 of a result of the determination as to whether or not the object collided with the vehicle, as indicated by arrow A46.

When the object collided with the vehicle based on the determination result acquired from the collision determination unit 47, the accident detection control unit 46 generates accident information including the acquired vehicle information and the video data The accident detection control unit 46 stores the generated accident information in the temporary storage unit 50, as indicated by arrow A47.

After storing the accident information in temporary storage unit 50, the accident detection control unit 46 outputs an upload command to the upload unit 48, as indicated by arrow A48.

Upon acquiring the upload command from the accident detection control unit 46, the upload unit 48 retrieves the accident information from the temporary storage unit 50, as indicated by arrow A49. The upload unit 48 uploads the retrieved accident information to the accident information server 3.

Next, a procedure of the accident detection process in the second embodiment will be described. In the present embodiment, for the sake of simplicity of description, accident detection using microphones 31 and 33 is performed.

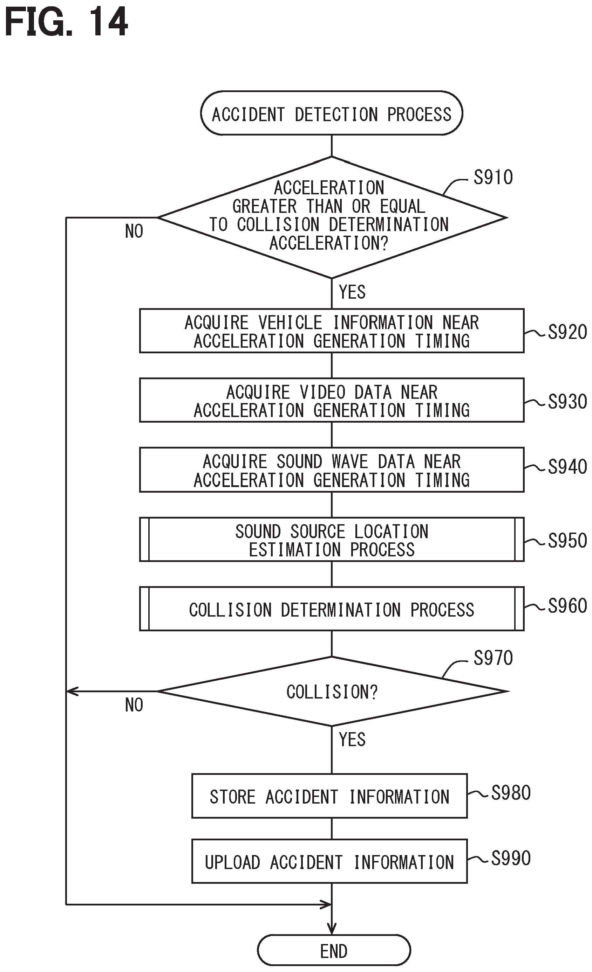

When the accident detection process of the second embodiment is executed, as shown in FIG. 14, the CPU 21 of the control unit 11 in S910 determines whether or not the detected acceleration is greater than or equal to a preset collision determination acceleration. If the acceleration is less than the collision determination acceleration, the CPU 21 ends the accident detection process.

If the acceleration is greater than or equal to the collision determination acceleration, the CPU 21 in S920 acquires the vehicle information near the timing when the acceleration became greater than or equal to the collision determination acceleration (hereinafter referred to as "acceleration generation timing"). Near the acceleration generation timing refers to, for example, a time range from a given time (e.g., 1 second before) before the acceleration generation timing to a given time after (e.g., 1 second after) the acceleration generation timing.

In S930, the CPU 21 acquires the video data near the acceleration occurrence timing.

In S940, the CPU 21 acquires the sound wave data near the acceleration generation timing.

In S950, the CPU 21 executes a sound source location estimation process described below.

In S960, the CPU 21 executes a collision determination process in the same manner as S70.

In S970, the CPU 21 determines whether or not the collision has occurred based on a result of the determination in S960. If the collision has not occurred, the CPU 21 ends the accident detection process.

If the collision has occurred, the CPU 21 in S980 generates the above accident information and stores the generated accident information in the temporary storage unit 50.

In S990, the CPU 21 retrieves the accident information generated in S980 from temporary storage unit 50 and uploads the retrieved accident information to the accident information server 3.

After the S990 is ended, the CPU 21 ends the accident detection process.

Next, a procedure of the sound source location estimation process executed in S950 will be described.

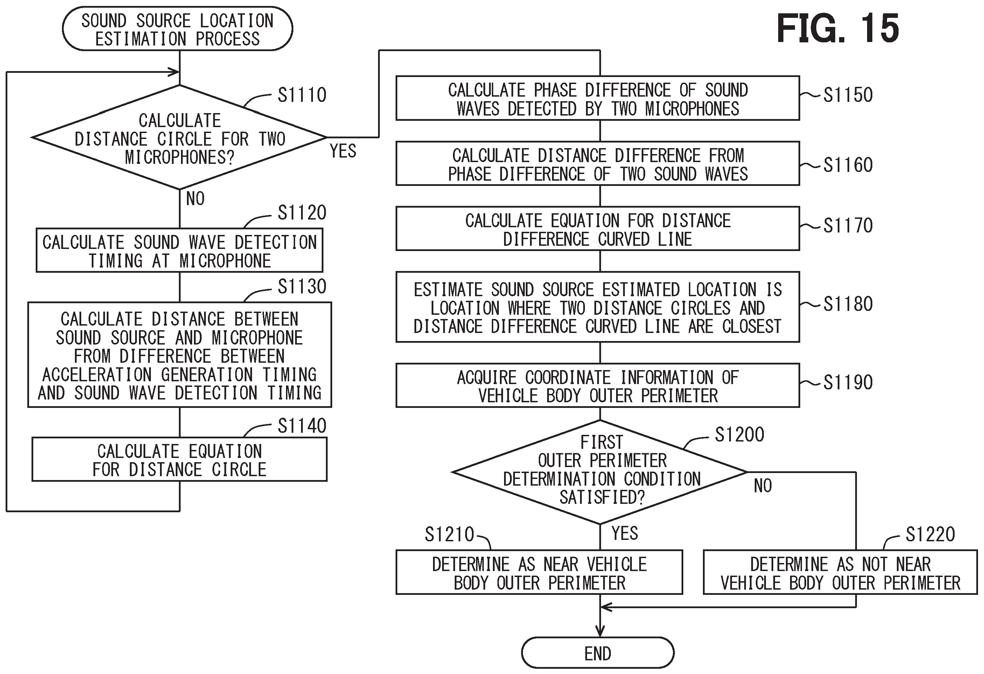

When the sound source location estimation process of the second embodiment is executed, as shown in FIG. 15, the CPU 21 in S1110 determines whether or not the above distance circle has been calculated for each of the microphones 31, 33.

If the distance circle has not been calculated, the CPU 21 in S1120 calculates the timing of detecting the sound wave at each of microphones 31 and 33 (hereinafter referred to as "sound wave detection timing").

In S1130, for each microphone 31, 33, the CPU 21 calculates the distance between microphone and the sound source based on the time difference between the acceleration generation timing and the sound wave detection timing.

In S1140, for each microphone 31, 33, the CPU 21 calculates, based on the distance calculated in S1130, an equation representing a distance circle passing through multiple points with the constant distance as the distance to the sound source SS1 and proceeds to S1110.

If the distance circle has been calculated in S1110, the CPU 21 in S1150 calculates the difference in phase between the two sound waves detected by the microphones 31 and 33.

In S1160, the CPU 21 calculates the difference in distance from microphones 31, 33 to the sound source based on the phase difference calculated in S1150.

In S1170, the CPU 21 calculates, based on the distance calculated in S1160, an equation representing a distance difference curved line passing through multiple points where the difference in distance from the two microphones 31, 33 is constant as the distance difference from the sound source.

In S1180, the CPU 21 estimates that the sound source estimated location is the coordinate location at which the two distance difference curved lines and one distance difference curved line are closest to each other.

In S1190, the CPU 21 acquires the vehicle body information from the vehicle body information storage unit 49.

In S1200, the CPU 21 determines whether or not the first outer perimeter determination condition is satisfied, in the same manner as in S280.

If the first outer perimeter determination condition is satisfied, the CPU 21 in S1210 determines that the sound source estimated location estimated in S1180 is near the vehicle body outer perimeter, and ends the sound source location estimation process.

If the first outer perimeter determination condition is not satisfied, the CPU 21 determines in S1220 that the sound source estimated location estimated in S1180 is not near the vehicle body outer perimeter, and ends the sound source location estimation process.

The vehicle accident detection device 2 configured as described above is configured to detect, as the sound generation timing being the timing of sound generation at the sound source, the timing when the acceleration detected by the acceleration sensor 35 mounted to the vehicle becomes greater than or equal to the collision determination acceleration (i.e., the acceleration generation timing).

The vehicle accident detection device 2 is configured to estimate the sound source estimated location based on the difference between the sound generation timing and each of the two sound detection timings being timings of sound detection by the microphones 31 and 33. The vehicle accident detection device 2 is configured to determine whether or not the sound source estimated location is on the vehicle body outer perimeter. The vehicle accident detection device 2 is configured to determine that a collision has occurred, upon determining that the sound source estimated location is on the vehicle body outer perimeter.

This vehicle accident detection device 2 can detect a vehicle collision accident using multiple microphones 31, 33 mounted to the vehicle.

The vehicle accident detection device 2 is further configured to estimate the sound source estimated location based on the difference between the two sound detection timings being timings of sound detection by the two microphones 31, 33. Because of this, the vehicle accident detection device 2 can improve estimation accuracy of the sound source estimated location.

In the above-described embodiment, S1110 to S1180 correspond to a process of a sound source location estimation unit, S1190 to S1220 correspond to a process of a vehicle body outer perimeter determination unit, and S910 corresponds to a process of a sound generation timing detection unit.

### (Third Embodiment).

Hereinafter, a third embodiment of the present disclosure will be described with reference to the drawings. A difference between the third embodiment and the first embodiment will be described. Like reference numerals are used to refer to like parts.

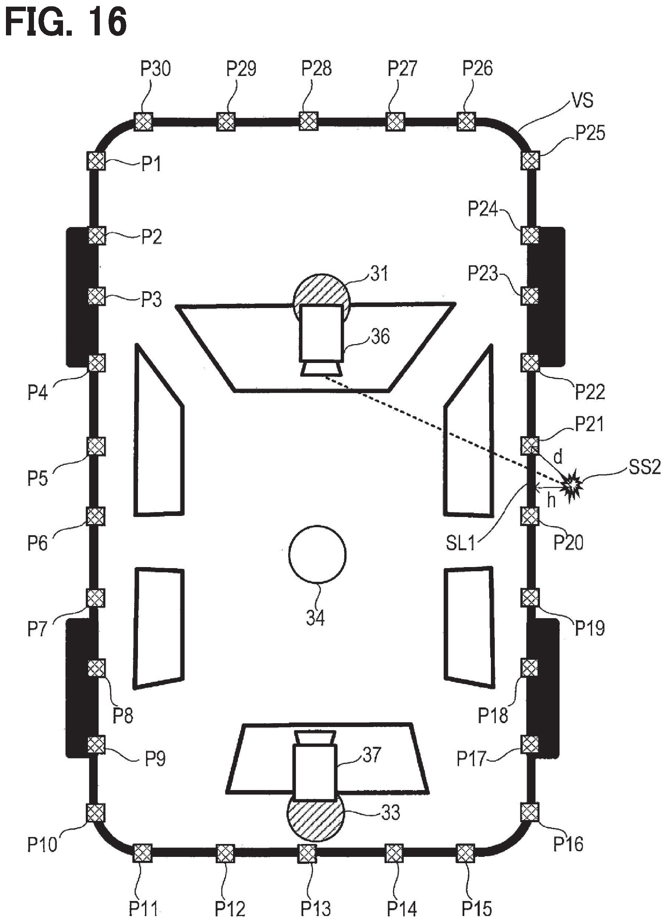

The accident information collection system 1 of the third embodiment differs from the first embodiment in that the microphone 32 is omitted and the microphone 31 is mounted to the center of the dashboard, as shown in FIG. 16. The camera 36 is mounted, for example, above the center of the dashboard and images the rear of the vehicle. The camera 37 is mounted, for example, above a rear side portion of the cargo area of the vehicle and images the front of the vehicle.

The vehicle accident detection device 2 of the third embodiment determines whether or not an object had come in contact with the vehicle by analyzing the video data captured by the cameras 36, 37. When the object in contact with the vehicle is present, the vehicle accident detection device 2 estimates that the sound source estimated location is the location where the object had come in contact with the vehicle and estimates that the sound generation timing is the timing of the object contacting with the vehicle. The vehicle accident detection device 2 determines that the sound source estimated location is near the vehicle body outer perimeter, when the above first outer perimeter determination condition is satisfied for the sound source estimated location.

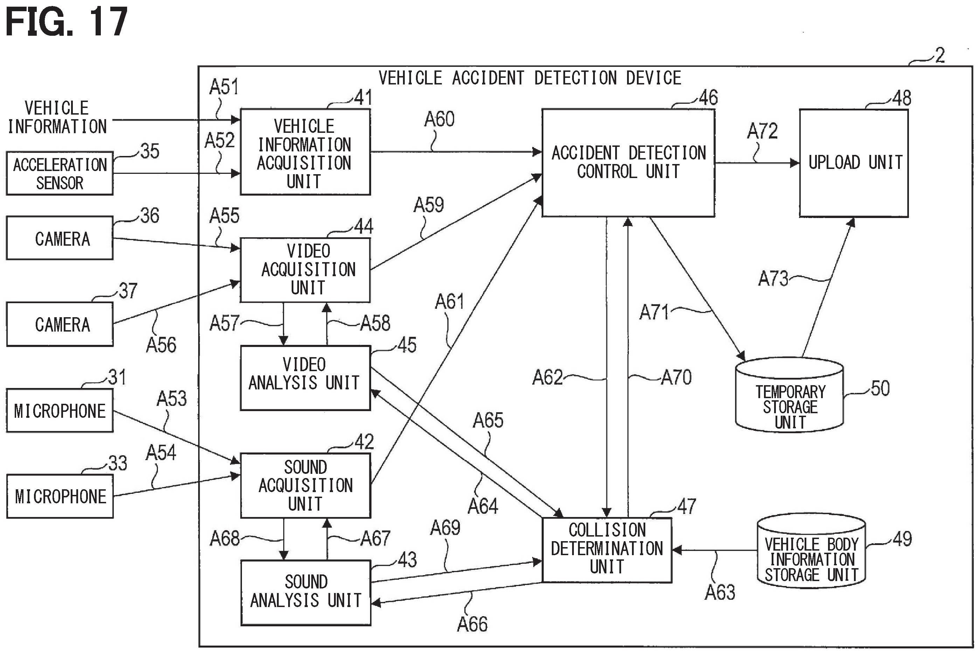

As shown in FIG. 17, the vehicle accident detection device 2 includes a vehicle information acquisition unit 41, a sound acquisition unit 42, a sound analysis unit 43, a video acquisition unit 44, a video analysis unit 45, an accident detection control unit 46, a collision determination unit 47, and an upload unit 48 as functional blocks implemented by the CPU 21 executing a program stored in the ROM 22.

The vehicle information acquisition unit 41 constantly acquires vehicle information from multiple ECUs via the CAN communication unit 12, as indicated by arrow A51.

Furthermore, the vehicle information acquisition unit 41 constantly acquires acceleration information indicating the acceleration detected by the acceleration sensor 35 mounted to the vehicle, as indicated by arrow A52.

The sound acquisition unit 42 constantly acquires sound wave electrical signals from microphones 31 and 33, as indicated by arrows A53 and A54.

The video acquisition unit 44 constantly acquires video data generated by the cameras 36 and 37 mounted to the vehicle, as indicated by arrows A55 and A56.

The video acquisition unit 44 outputs the acquired video data to the video analysis unit 45, as indicated by arrow A57.

The video analysis unit 45 analyzes the video data acquired by the video acquisition unit 44 to determine whether or not an object had come into contact with the vehicle. Upon determining that there is the object that had contacted the vehicle, the video analysis unit 45 notifies the video acquisition unit 44 of the contact timing which is the timing when the object contacted with the vehicle, as indicated by arrow A58.

The video acquisition unit 44 notifies the accident detection control unit 46 of the contact timing, as indicated by arrow A59.

Upon being notified of the contact timing by the video acquisition unit 44, the accident detection control unit 46 acquires the vehicle information, the acceleration information, and the sound wave data at the contact timing, as shown by arrows A60 and A61.

After acquiring the vehicle information, the acceleration information and the sound wave data, the accident detection control unit 46 outputs a collision determination request to the collision determination unit 47, as indicated by arrow A62.

Upon acquiring the collision determination request from the accident detection control unit 46, the collision determination unit 47 acquires the vehicle body information from the vehicle body information storage unit 49, as indicated by arrow A63.

To the video analysis unit 45, the collision determination unit 47 outputs a request to provide the contact location where the object contacted with the vehicle, as indicated by arrow A64.

Upon acquiring the request from collision determination unit 47 to provide the contact location, the video analysis unit 45 notifies the collision determination unit 47 of the contact location, as indicated by arrow A65.

The collision determination unit 47 outputs a sound wave analysis request to the sound analysis unit 43 requesting analysis of a feature of the sound waveform at the contact timing, as indicated by arrow A66.

Upon acquiring the sound wave analysis request from the collision determination unit 47, the sound analysis unit 43 outputs to the sound acquisition unit 42 a request to provide the sound wave data at the contact timing, as indicated by arrow A67.

Upon acquiring the request from the sound analysis unit 43 to provide sound wave data, the sound acquisition unit 42 outputs the sound wave data at the contact timing to the sound analysis unit 43, as indicated by arrow A68.

Upon acquiring the sound wave data from the sound acquisition unit 42, the sound analysis unit 43 analyzes the feature of the sound waveform and notifies the collision determination unit 47 of the sound wave data analysis result, as indicated by arrow A69.

The collision determination unit 47 determines whether or not an object collided with the vehicle based on the vehicle information, the acceleration information, the contact location, the vehicle body information, and the feature of the sound waveform. The collision determination unit 47 notifies the accident detection control unit 46 of a result of the determination as to whether or not the object collided with the vehicle, as indicated by arrow A70.

The accident detection control unit 46 generates accident information including the acquired vehicle information and video data when the object collides with the vehicle based on the determination result acquired from the collision determination unit 47. The accident detection control unit 46 stores the generated accident information in the temporary storage unit 50, as indicated by arrow A71.

After storing the accident information in the temporary storage unit 50, the accident detection control unit 46 outputs an upload command to the upload unit 48, as indicated by arrow A72.

Upon acquiring the upload command from the accident detection control unit 46, the upload unit 48 retrieves the accident information from the temporary storage unit 50, as indicated by arrow A73. The upload unit 48 uploads the retrieved accident information to the accident information server 3.

Next, a procedure of the accident detection process in the third embodiment will be described.

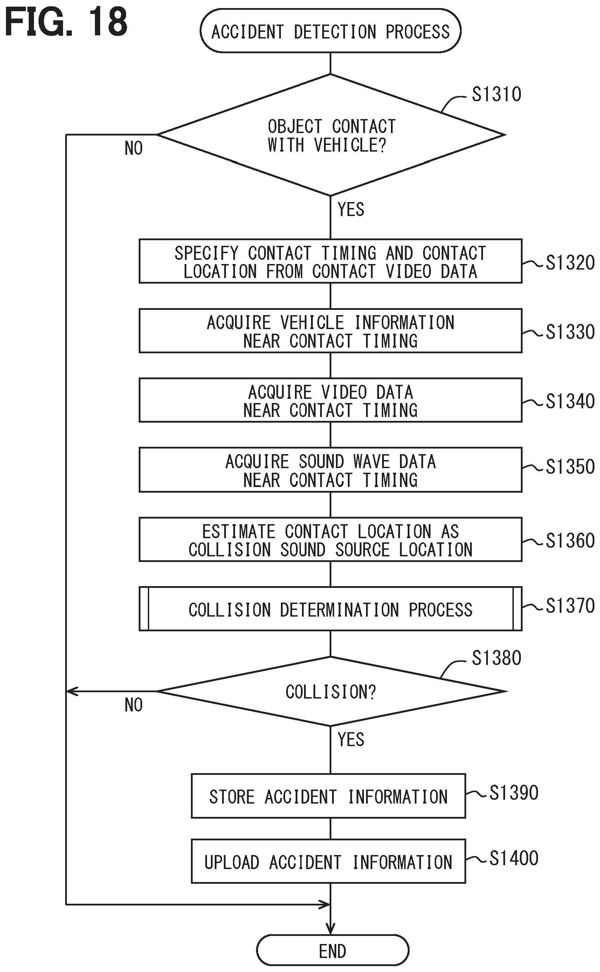

When the accident detection process of the third embodiment is executed, as shown in FIG. 18, the CPU 21 of the control unit 11 in S1310 determines whether or not there is the object in contact with the vehicle by analyzing the video data generated by the cameras 36 and 37. If there is no object in contact with the vehicle, the CPU 21 ends the accident detection process.

If there is the object contacting with the vehicle, the CPU 21 in S1320 specifies the contact timing at which the object contacted with the vehicle and the contact location at which the object contacted with the vehicle, based on the video data (hereinafter, contact video data) where the situation in which the object contacted with the vehicle is imaged.

In S1330, the CPU 21 acquires the vehicle information near the contact timing. Near the contact timing refers to, for example, a time range from a given time before (e.g., 1 second before) the contact timing to a given time after (e.g., 1 second after) the contact timing.

In S1340, the CPU 21 acquires the video data near the contact timing.

In S1350, the CPU 21 acquires the sound wave data near the contact timing.

In S1360, the CPU 21 estimates that the collision sound source location is the contact location specified in S1320.

In S1370, the CPU 21 executes a collision determination process described below.

In S1380, the CPU 21 determines whether or not the collision has occurred based on the result of the determination in S1370. If no collision has occurred, the CPU 21 ends the accident detection process.

If the collision has occurred, the CPU 21 in S1390 generates the above accident information and stores the generated accident information in the temporary storage unit 50.

In S1400, the CPU 21 retrieves the accident information generated in S1390 from the temporary storage unit 50 and uploads the retrieved accident information to the accident information server 3.

When the process of S1400 is ended, the CPU 21 ends the accident detection process.

Next, a procedure of the collision determination process executed in S1370 will be described.

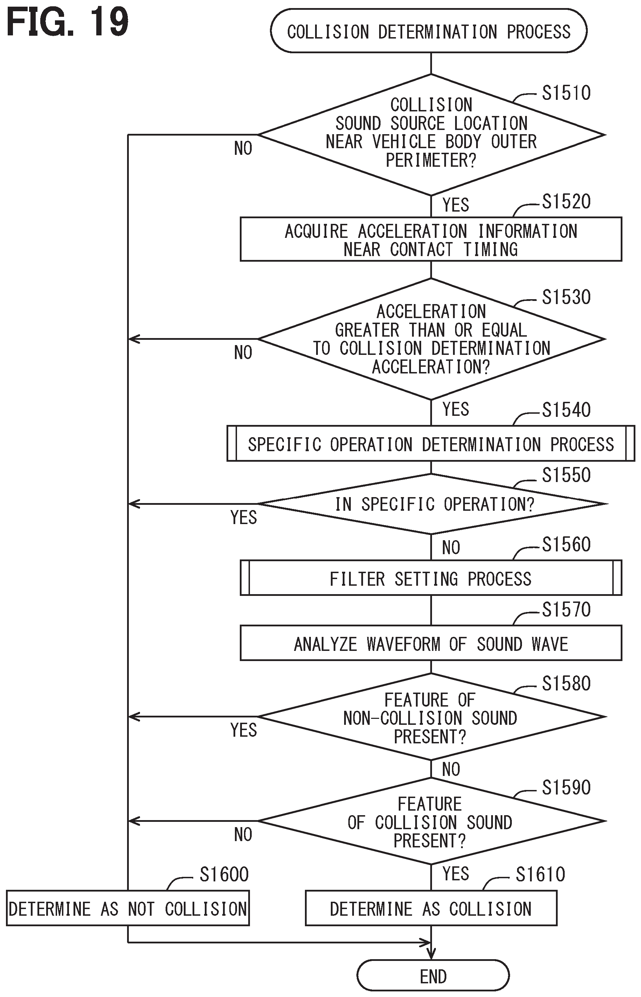

When the third embodiment of the collision determination process is executed, as shown in FIG. 19, the CPU 21 in S1510 determines whether or not the collision sound source location is near the vehicle body outer perimeter. Specifically, the CPU 21 determines whether or not the first outer perimeter determination condition is satisfied, in the same manner as S1200 in the second implementation. If the first outer perimeter determination condition is satisfied, the CPU 21 determines that the collision sound source location is near the vehicle body outer perimeter. If the first outer perimeter determination condition is not satisfied, the CPU 21 determines that the collision sound source location is not near the vehicle body outer perimeter.

If the collision sound source location is not near the vehicle body outer perimeter, the CPU 21 proceeds to S1600.

If the collision sound source location is near the outer body outer perimeter, the CPU 21 inS1520 acquires the acceleration information near the contact timing.

In S1530, the CPU 21 determines whether or not the acceleration indicated by the acceleration information acquired in S1520 is greater than or equal to a preset collision determination acceleration. If the acceleration is less than the collision determination acceleration, the CPU 21 proceeds to S1600.

If the acceleration is greater than or equal to the collision determination acceleration, the CPU 21 in S1540 executes a specific operation determination process in the same manner as S470.

In S1550, the CPU 21 determines whether or not the specific operation in progress is present based on the result of the determination in S1540. If the specific operation in progress is present, the CPU 21 proceeds to S1600.

If the specific operation in progress is not present, the CPU 21 in S1560 executes a filter setting process in the same manner as S500.

In S1570, the CPU 21 analyzes the waveform of the sound wave on which the filter setting process of S1560 has been performed and determines whether or not the feature of the collision sound is present and whether or not the feature of the non-collision sound is present.

In S1580, the CPU 21 determines whether or not the feature of non-collision sound is present in the sound waves near the contact timing based on the determination result of S1570. If the feature of non-collision sound is absent, the CPU 21 proceeds to S1600.

If the feature of non-collision sound is present, the CPU 21 in S1590 determines whether or not the feature of collision sound is present in the sound wave near the contact timing, based on the determination result of S1570. If the feature of collision sound is absent, the CPU 21 proceeds to S1600. If the feature of collision sound is present, the CPU 21 proceeds to S1610.

Upon proceeding to S1600, the CPU 21 determines that the collision has not occurred and ends the collision determination process.

Upon proceeding to S1610, the CPU 21 determines that the collision has occurred and ends the collision determination process.

Although one embodiment of the present disclosure has been described above, the present disclosure is not limited to the above embodiment, and various modifications are possible.

### (First Modification).

In the second embodiment above, the point where the distance circle CL1 intersects the distance difference curved line L11, or the point where the distance circle CL2 intersects the distance difference curved line L11, or the region surrounded by the distance circle CL1, the distance circle CL2, and the distance difference curved line L11 is estimated as the two-dimensional location of the sound source SS1.

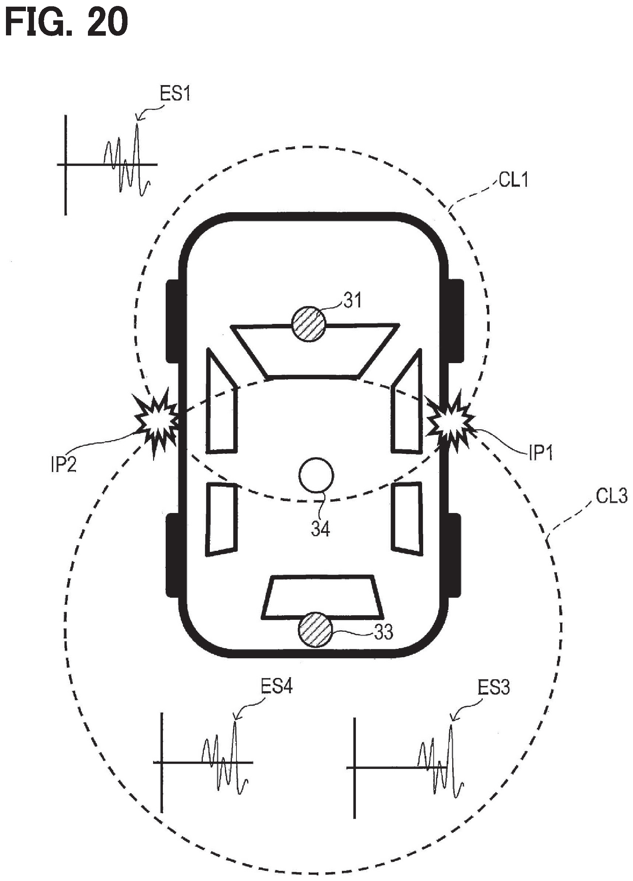

However, as shown in FIG. 20, the microphones 31 and 33 detect the sound wave generated at the sound source later than the sound wave is generated at the sound source. This difference in time is considerable the distance from the sound source. Therefore, for each of the microphones 31 and 33, the distance circle CL1, CL3 for estimating the location of the sound source can be calculated based on the distance from the sound source.

When the sound source location is estimated using only the distance circles CL1 and CL3, the two intersection points IP1, IP2 of the distance circles CL1, CL3 are candidates for the sound source location. When there are two candidates for the sound source location, it may be determined that the sound source is located on the vehicle body outer perimeter if the following first or second collision determination condition is satisfied. The first collision determination condition is that both candidates are located on the vehicle body outer perimeter. The second collision determination condition is that one of the candidates is located on the vehicle body outer perimeter and the waveform of the sound wave detected by microphones 31 and 33 has a typical collision sound feature.

### (Second Modification).

The above embodiments illustrate a configuration where the sound analysis unit 43, the video analysis unit 45, the accident detection control unit 46, and the collision determination unit 47 are mounted to the vehicle. However, the accident information server 3 may include the sound analysis unit 43, the video analysis unit 45, the accident detection control unit 46, and the collision determination unit 47.

### (Third Modification).

The above embodiments illustrate a configuration where the timing of sound generation is detected based on the acceleration detected by the acceleration sensor 35 mounted to the vehicle. However, the timing of sound generation may be detected based on the video data generated by camera 36, 37 mounted to the vehicle and configured to image at least the outside of the vehicle.

### (Fourth Modification).

The above embodiments illustrate a configuration where it is determined that the sound source estimated location is on the vehicle body outer perimeter when the preset first, second outer perimeter determination condition indicating that the sound source estimated location is near the vehicle body outer perimeter is satisfied. However, instead of the sound source estimated location, the collision sound source location estimated by the video analysis unit 45 may be used to determine whether the first, second outer perimeter determination condition is satisfied. In this case, the video analysis unit 45 estimates the collision sound source location where the object collided with the vehicle based on the video data generated by the camera 36, 37.

### (Fifth Modification).

The above embodiments illustrate a configuration where it is determined whether or not the feature of non-collision sound is present in the sound wave near the sound generation timing. However, the sound analysis unit 43 may determine whether the sound detected by the multiple microphones 31 to 34 is a speech voice when the sound source estimated location is near the head of the driver of the vehicle or near the speaker mounted to the vehicle.

The control unit 11 and the method thereof described in the present disclosure may be implemented by a dedicated computer provided by configuring a processor and a memory programmed to execute one or more functions embodied by a computer program. The control unit 11 and the method thereof described in the present disclosure may be implemented by a dedicated computer provided by configuring a processor with one or more dedicated hardware logic circuits. The control unit 11 and the method thereof described in the present disclosure may be implemented by one or more dedicated computers provided by configuring a processor and a memory programmed to execute one or more functions in combination with a processor configured with one or more hardware logic circuits. The computer program may be stored in a computer-readable non-transitory tangible storage medium as instructions executed by a computer. Functions of each unit included in the control unit 11 does not necessarily need to include software, and all the functions may be implemented using one or more hardware circuits.

Multiple functions of a single element in the above-described embodiments may be implemented by multiple elements, or one function of a single element may be implemented by multiple elements. Multiple functions of multiple elements may be implemented by a single element, or one function implemented by multiple elements may be implemented by a single element. Part of the configuration of the above embodiments may be omitted. At least part of the configuration of the described above embodiment may be added to or replaced with another configuration of another embodiment described above.

**In** addition to the vehicle accident detection device 2 described above, the present disclosure may also be implemented in various forms, such as a system comprising the vehicle accident detection device 2, a program for causing a computer to function as the vehicle accident detection device 2, a non-transitory tangible storage medium such as semiconductor memory storing thereon the program, a method of vehicle accident detection, etc.

### (Technical Ideas disclosed in the present disclosure).

### (Item 1).

A vehicle accident detection device (2) includes:
a sound source location estimation unit (S210 to S250, S1110 to S1180) configured to estimate a sound source estimated location being a location of a sound source, based on detection results of a plurality of sound detection units (31 to 34) mounted to a vehicle and configured to detect a sound;
a vehicle body outer perimeter determination unit (S260 to S330, S1190 to S1220) configured to determine whether or not the sound source estimated location is on a vehicle body outer perimeter; and
a collision determination unit (S410, S450, S460, S480, S520 to S550) configured to determine that a collision accident has occurred when the vehicle body outer perimeter determination unit determines that the sound source estimated location is on the vehicle body outer perimeter.

### (Item 2).

In the vehicle accident detection device according to item 1,
the sound source location estimation unit (S210 to S250) is configured to estimate the sound source estimated location based on a difference in sound detection timing between three or more of the sound detection units each detecting the sound.

### (Item 3).

In the vehicle accident detection device according to item 2,
the sound source location estimation unit is configured to estimate a two-dimensional location of the sound source as the sound source estimated location, by using three or more of the sound detection units.

### (Item 4).

In the vehicle accident detection device according to item 2,
the sound source location estimation unit is configured to estimate a three-dimensional location of the sound source as the sound source estimated location, by using four or more of the sound detection units.

### (Item 5).

The vehicle accident detection device according to item 1 further includes:
a sound generation timing detection unit (S910) configured to detect a sound generation timing of generation of the sound at the sound source, wherein:
the sound source location estimation unit (S1110 to S1180) is configured to estimate the sound source estimated location based on a difference between the sound generation timing detected by the sound generation timing detection unit and each of two or more sound detection timings of sound detection by each of two or more of the sound detection units.

### (Item 6).

In the vehicle accident detection device according to item 5:
the sound source location estimation unit is configured to estimate a two-dimensional location of the sound source as the sound source estimated location, by using two or more of the sound detection units.

### (Item 7).

In the vehicle accident detection device according to item 5:
the sound source location estimation unit is configured to estimate a three-dimensional location of the sound source as the sound source estimated location, by using three or more of the sound detection units.

### (Item 8).

In the vehicle accident detection device according to any one of items 5 to 7:
the sound generation timing detection unit is configured to detect the sound generation timing based on an acceleration detected by an acceleration sensor mounted to the vehicle.

### (Item 9).

In the vehicle accident detection device according to any one of items 5 to 7:
the sound generation timing detection unit is configured to detect the sound generation timing based on video data generated by an imaging unit (36, 37) mounted to the vehicle and configured to image at least an outside of the vehicle.

### (Item 10).

In the vehicle accident detection device according to any one of items 5 to 9:
the sound source location estimation unit is further configured to estimate the sound source estimated location based on a difference between two or more sound detection timings of sound detection by each of two or more of the sound detection units.

### (Item 11).

In the vehicle accident detection device according to any one of items 1 to 10:
the vehicle body outer perimeter determination unit is configured to determine that the sound source estimated location is on the vehicle body outer perimeter when an outer perimeter determination condition, which is preset to indicate that the sound source estimated location is near the vehicle body outer perimeter, is satisfied.

### (Item 12).

In the vehicle accident detection device according to item 11:
the outer perimeter determination condition is set based on a plurality of distances from the plurality of sound detection units to the sound source estimated location.

### (Item 13).

The vehicle accident detection device according to item 11 further includes:
a vehicle body information storage unit (49) configured to store vehicle body information indicating a plurality of coordinate locations on the vehicle body outer perimeter, wherein:
the outer perimeter determination condition is set based on the vehicle body information so as to indicate that the sound source estimated location is near the vehicle body outer perimeter.

### (Item 14).

The vehicle accident detection device according to item 11 further includes:
a video analysis unit (45) configured to estimate a collision sound source location, which is a location where an object collided with the vehicle, by analyzing video data generated by an imaging unit (36, 37) mounted to the vehicle and configured to image at least an outside of the vehicle; and
a vehicle body information storage unit (49) configured to store vehicle body information indicating a plurality of coordinate locations on the vehicle body outer perimeter, wherein:
the outer perimeter determination condition is set based on the vehicle body information so as to indicate that the collision sound source location is near the vehicle body outer perimeter.

### (Item 15).

The vehicle accident detection device according to any one of items 1 to 14 further includes:
a sound analysis unit (43) configured to analyze waveform of the sound detected by the plurality of sound detection units, wherein:
the collision determination unit is configured to determine that the collision accident has occurred when the vehicle body outer perimeter determination unit determines that the sound source estimated location is on the vehicle body outer perimeter and the sound detected by the plurality of sound detection units has a collision sound feature based on an analysis result by the sound analysis unit, wherein the collision sound feature is preset as a feature of a collision sound.

### (Item 16).

The vehicle accident detection device according to any one of items 1 to 15 further includes:
a sound analysis unit (43) configured to analyze waveform of the sound detected by the plurality of sound detection units, wherein:
the collision determination unit is configured to determine that the collision accident has occurred when the vehicle body outer perimeter determination unit determines that the sound source estimated location is on the vehicle body outer perimeter and the sound detected by the plurality of sound detection units does not have a non-collision sound feature based on an analysis result by the sound analysis unit, wherein the non-collision sound feature is preset as a feature of a non-collision sound.

### (Item 17).

In the vehicle accident detection device according to item 16:
the non-collision sound includes a vehicle operation sound generated when a driver of the vehicle performs an operation.

### (Item 18).

In the vehicle accident detection device according to item 16 or item 17:
the non-collision sound includes a speech voice.

### (Item 19).

In the vehicle accident detection device according to item 18:
the sound analysis unit is configured to determine whether or not the sound detected by the plurality of sound detection units is the speech voice when the sound source estimated location is near a head of a driver of the vehicle or near a speaker mounted to the vehicle.

### (Item 20).

The vehicle accident detection device according to any one of items 15 to 19,
a removing unit (S710 to S820) configured to perform, on the sound detected by the plurality of sound detection units, a filter process of removing a non-collision sound.

### (Item 21).

The vehicle accident detection device according to any one of items 1 to 20 further includes:
a specific operation determination unit (S610 to S660) configured to determine whether or not a driver of the vehicle has performed a predetermined specific operation, wherein:
the collision determination unit is configured to determine that the collision accident has not occurred when the vehicle body outer perimeter determination unit determines that the sound source estimated location is on the vehicle body outer perimeter and the driver has performed a specific operation based on a result of determination by the specific operation determination unit.

### (Item 22).

In the vehicle accident detection device according to any one of items 1 to 21:
the collision determination unit is configured to determine that the collision accident has not occurred when the vehicle body outer perimeter determination unit determines that the sound source estimated location is on the vehicle body outer perimeter and an acceleration at a sound generation timing of generation of the sound at the sound source is less than a preset collision determination acceleration.

### (Item 23).

The vehicle accident detection device according to any one of items 1 to 22 further includes:
a video analysis unit (45) configured to estimate a collision sound source location, which is a location where an object collided with the vehicle, by analyzing video data generated by an imaging unit (36, 37) mounted to the vehicle and configured to image at least an outside of the vehicle, wherein:
the collision determination unit is configured to determine that the collision accident has not occurred when the vehicle body outer perimeter determination unit determines that the sound source estimated location is on the vehicle body outer perimeter and the object did not collide with the vehicle at a sound generation timing of generation of the sound at the sound source based on a result of analysis by the video analysis unit.

### (Item 24).

In the vehicle accident detection device according to any one of items 1 to 23:
the plurality of sound detection units is mounted to an inside of the vehicle.

## Claims

1. A vehicle accident detection device (2) comprising:
a sound source location estimation unit (S210 to S250, S1110 to S1180) configured to estimate a sound source estimated location being a location of a sound source, based on detection results of a plurality of sound detection units (31 to 34) mounted to a vehicle and configured to detect a sound;
a vehicle body outer perimeter determination unit (S260 to S330, S1190 to S1220) configured to determine whether or not the sound source estimated location is on a vehicle body outer perimeter; and
a collision determination unit (S410, S450, S460, S480, S520 to S550) configured to determine that a collision accident has occurred when the vehicle body outer perimeter determination unit determines that the sound source estimated location is on the vehicle body outer perimeter.

2. The vehicle accident detection device according to claim 1, wherein:
the sound source location estimation unit (S210 to S250) is configured to estimate the sound source estimated location based on a difference in sound detection timing between three or more of the sound detection units each detecting the sound.

3. The vehicle accident detection device according to claim 2, wherein:
the sound source location estimation unit is configured to estimate a two-dimensional location of the sound source as the sound source estimated location, by using three or more of the sound detection units.

4. The vehicle accident detection device according to claim 2, wherein:
the sound source location estimation unit is configured to estimate a three-dimensional location of the sound source as the sound source estimated location, by using four or more of the sound detection units.

5. The vehicle accident detection device according to claim 1, further comprising:
a sound generation timing detection unit (S910) configured to detect a sound generation timing of generation of the sound at the sound source, wherein:
the sound source location estimation unit (S1110 to S1180) is configured to estimate the sound source estimated location based on a difference between the sound generation timing detected by the sound generation timing detection unit and each of two or more sound detection timings of sound detection by each of two or more of the sound detection units.

6. The vehicle accident detection device according to claim 5, wherein:
the sound source location estimation unit is configured to estimate a two-dimensional location of the sound source as the sound source estimated location, by using two or more of the sound detection units.

7. The vehicle accident detection device according to claim 5, wherein:
the sound source location estimation unit is configured to estimate a three-dimensional location of the sound source as the sound source estimated location, by using three or more of the sound detection units.

8. The vehicle accident detection device according to any one of claims 5 to 7, wherein:
the sound generation timing detection unit is configured to detect the sound generation timing based on an acceleration detected by an acceleration sensor mounted to the vehicle.

9. The vehicle accident detection device according to any one of claims 5 to 7, wherein:
the sound generation timing detection unit is configured to detect the sound generation timing based on video data generated by an imaging unit (36, 37) mounted to the vehicle and configured to image at least an outside of the vehicle.

10. The vehicle accident detection device according to any one of claims 5 to 7, wherein:
the sound source location estimation unit is further configured to estimate the sound source estimated location based on a difference between two or more sound detection timings of sound detection by each of two or more of the sound detection units.

11. The vehicle accident detection device according to any one of claims 1 to 7, wherein:
the vehicle body outer perimeter determination unit is configured to determine that the sound source estimated location is on the vehicle body outer perimeter when an outer perimeter determination condition, which is preset to indicate that the sound source estimated location is near the vehicle body outer perimeter, is satisfied.

12. The vehicle accident detection device according to claim 11, wherein:
the outer perimeter determination condition is set based on a plurality of distances from the plurality of sound detection units to the sound source estimated location.

13. The vehicle accident detection device according to claim 11, further comprising:
a vehicle body information storage unit (49) configured to store vehicle body information indicating a plurality of coordinate locations on the vehicle body outer perimeter, wherein:
the outer perimeter determination condition is set based on the vehicle body information so as to indicate that the sound source estimated location is near the vehicle body outer perimeter.

14. The vehicle accident detection device according to claim 11, further comprising:
a video analysis unit (45) configured to estimate a collision sound source location, which is a location where an object collided with the vehicle, by analyzing video data generated by an imaging unit (36, 37) mounted to the vehicle and configured to image at least an outside of the vehicle; and
a vehicle body information storage unit (49) configured to store vehicle body information indicating a plurality of coordinate locations on the vehicle body outer perimeter, wherein:
the outer perimeter determination condition is set based on the vehicle body information so as to indicate that the collision sound source location is near the vehicle body outer perimeter.

15. The vehicle accident detection device according to any one of claims 1 to 7, further comprising:
a sound analysis unit (43) configured to analyze waveform of the sound detected by the plurality of sound detection units, wherein:
the collision determination unit is configured to determine that the collision accident has occurred when the vehicle body outer perimeter determination unit determines that the sound source estimated location is on the vehicle body outer perimeter and the sound detected by the plurality of sound detection units has a collision sound feature based on an analysis result by the sound analysis unit, wherein the collision sound feature is preset as a feature of a collision sound.

16. The vehicle accident detection device according to any one of claims 1 to 7, further comprising:
a sound analysis unit (43) configured to analyze waveform of the sound detected by the plurality of sound detection units, wherein:
the collision determination unit is configured to determine that the collision accident has occurred when the vehicle body outer perimeter determination unit determines that the sound source estimated location is on the vehicle body outer perimeter and the sound detected by the plurality of sound detection units does not have a non-collision sound feature based on an analysis result by the sound analysis unit, wherein the non-collision sound feature is preset as a feature of a non-collision sound.

17. The vehicle accident detection device according to claim 16, wherein:
the non-collision sound includes a vehicle operation sound generated when a driver of the vehicle performs an operation.

18. The vehicle accident detection device according to claim 16, wherein:
the non-collision sound includes a speech voice.

19. The vehicle accident detection device according to claim 18, wherein:
the sound analysis unit is configured to determine whether or not the sound detected by the plurality of sound detection units is the speech voice when the sound source estimated location is near a head of a driver of the vehicle or near a speaker mounted to the vehicle.

20. The vehicle accident detection device according to claim 15, further comprising:
a removing unit (S710 to S820) configured to perform, on the sound detected by the plurality of sound detection units, a filter process of removing a non-collision sound.

21. The vehicle accident detection device according to any one of claims 1 to 7, further comprising:
a specific operation determination unit (S610 to S660) configured to determine whether or not a driver of the vehicle has performed a predetermined specific operation, wherein:
the collision determination unit is configured to determine that the collision accident has not occurred when the vehicle body outer perimeter determination unit determines that the sound source estimated location is on the vehicle body outer perimeter and the driver has performed a specific operation based on a result of determination by the specific operation determination unit.

22. The vehicle accident detection device according to any one of claims 1 to 7, wherein:
the collision determination unit is configured to determine that the collision accident has not occurred when the vehicle body outer perimeter determination unit determines that the sound source estimated location is on the vehicle body outer perimeter and an acceleration at a sound generation timing of generation of the sound at the sound source is less than a preset collision determination acceleration.

23. The vehicle accident detection device according to any one of claims 1 to 7, further comprising:
a video analysis unit (45) configured to estimate a collision sound source location, which is a location where an object collided with the vehicle, by analyzing video data generated by an imaging unit (36, 37) mounted to the vehicle and configured to image at least an outside of the vehicle, wherein:
the collision determination unit is configured to determine that the collision accident has not occurred when the vehicle body outer perimeter determination unit determines that the sound source estimated location is on the vehicle body outer perimeter and the object did not collide with the vehicle at a sound generation timing of generation of the sound at the sound source based on a result of analysis by the video analysis unit.

24. The vehicle accident detection device according to any one of claims 1 to 7, wherein:
the plurality of sound detection units is mounted to an inside of the vehicle.
